(19) Europäisches Patentamt
European Patent Office
Office européen des brevets

(11) **EP 4 637 205 A1**

(12) **EUROPEAN PATENT APPLICATION**
published in accordance with Art. 153(4) EPC

(43) Date of publication:
**22.10.2025 Bulletin 2025/43**

(21) Application number: **24755890.1**

(22) Date of filing: **18.01.2024**

(51) International Patent Classification (IPC):
**H04W 24/10** (2009.01)

(52) Cooperative Patent Classification (CPC):
**G06N 5/04; G06N 20/00; H04B 17/309;
H04W 24/02; H04W 24/04; H04W 24/10**

(86) International application number:
**PCT/CN2024/073082**

(87) International publication number:
**WO 2024/169515 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 CN 202310165267**

(71) Applicant: **Huawei Technologies Co., Ltd.
Shenzhen, Guangdong 518129 (CN)**

(72) Inventors:
• **HA, Yinaer**
  **Shenzhen, Guangdong 518129 (CN)**
• **GENG, Tingting**
  **Shenzhen, Guangdong 518129 (CN)**
• **ZENG, Yu**
  **Shenzhen, Guangdong 518129 (CN)**
• **CHEN, Jun**
  **Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57)    A communication method and apparatus are provided, to identify that inference performance of an artificial intelligence (artificial intelligence, AI) model in a communication network deteriorates. In this application, the method includes: A second network element sends configuration information to a first network element. Correspondingly, the first network element receives the configuration information from the second network element. The configuration information includes a performance indicator of a first AI model and a preset condition corresponding to the performance indicator. The first network element changes the first AI model when a value of the performance indicator of the first AI model meets a preset condition. The first network element is a distributed unit (distributed unit, DU), the second network element is a central unit (central unit, CU), and the DU and the CU are connected through an F 1 interface.

FIG. 9

**Description**

CROSS-REFERENCE TO RELATED APPLICATIONS

This application claims priority to Chinese Patent Application No. 202310165267.5, filed with the China National Intellectual Property Administration on February 16, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Artificial intelligence (artificial intelligence, AI) is a technology that performs complex computing by simulating a human brain. With improvement of data storage and computing capabilities, artificial intelligence is increasingly applied. The 3rd generation partnership project (3rd generation partnership project, 3GPP) proposes to apply artificial intelligence to a 5th generation (5th generation, 5G) communication system, to improve network performance and user experience through intelligent collection and data analysis.

An AI model is usually deployed in a terminal device. The terminal device performs inference based on the AI model. For example, in a channel state information (channel state information, CSI) prediction scenario, the terminal device may measure reference signals at a plurality of moments, to obtain channel state information at the plurality of moments, and then infer channel state information at a future moment based on the channel state information at the plurality of moments and the AI model. In this way, the terminal device can perform better data transmission with a network device based on the predicted channel state information.

However, inference performance of the AI model may deteriorate due to impact of a radio/non-radio environment factor. How to quickly identify that the inference performance of the AI model deteriorates is a technical problem that needs to be urgently resolved currently.

SUMMARY

This application provides a communication method and apparatus, to monitor performance of an AI model in a communication network, thereby quickly identifying that inference performance of the AI model deteriorates.

According to a first aspect, this application provides a communication method. The method includes: A second network element sends configuration information to a first network element. Correspondingly, the first network element receives the configuration information from the second network element. The configuration information includes a performance indicator of a first AI model and a preset condition corresponding to the performance indicator; and the first network element changes the first AI model when a value of the performance indicator of the first AI model meets a preset condition.

For example, the configuration information includes but is not limited to one or more of the following performance indicators: a squared generalized cosine similarity (squared generalized cosine similarity, SGCS), a normalized mean square error (normalized mean square error, NMSE), a spatial chordal distance (chordal distance), a Euclidean distance, a relative achievable rate (relative achievable rate, RAR), an input data distribution indicator (for example, probability density function (probability density function, PDF), skewness, kurtosis, mean, or variance), a throughput (throughput), an air interface load (payload), a model inference delay, model inference accuracy, a block error rate (block error ratio, BLER), computing complexity, overheads, power consumption, and storage.

In the foregoing technical solution, the second network element determines the performance indicator used to measure the first AI model and the preset condition corresponding to the performance indicator, generates the configuration information based on the performance indicator of the first AI model and the preset condition corresponding to the performance indicator, and delivers the configuration information to the first network element. Correspondingly, the first network element monitors a value of a performance indicator of an AI model in a communication network based on the performance indicator in the configuration information; and when the value of the performance indicator of the AI model meets the preset condition corresponding to the performance indicator, determines that inference performance of the AI model deteriorates, and therefore, indicates to change the first AI model in the communication network. In this way, it can be quickly identified that the inference performance of the AI model deteriorates, and a corresponding measure is taken, to ensure overall network performance.

For example, the first network element is a distributed unit (distributed unit, DU), and the second network element is a central unit (central unit, CU). The DU and the CU are connected through an F1 interface. The CU may send a CU configuration update (CU configuration update) message to the DU through the F1 interface. The CU configuration update message includes the configuration information. To be specific, when an access network device (for example, a base station) is of a CU-DU separation architecture, the CU delivers the configuration information to the DU, so that network side performance monitoring and network side decision-making can be implemented in a scenario such as a channel state information prediction scenario or a channel state information compression scenario. When performance of the first AI model deteriorates, a network side can find in a timely manner that the performance of the first AI model deteriorates, and perform an optimization action, to ensure overall network performance.

In a possible implementation, the first network element further obtains an actual result and an inference result. The inference result is obtained by a model inference entity (for example, a terminal device and/or a DU) in the communication network through inference based on the first AI model, and the actual result is obtained by a device in the communication network based on actual measurement. The first network element determines the value of the performance indicator of the first AI model based on the actual result and the inference result, and determines that the value of the performance indicator of the first AI model meets the preset condition.

In a possible implementation, in the channel state information prediction scenario, the first AI model is a one-sided model. To be specific, the first AI model is deployed in the terminal device. When the first network element obtains the actual result and the inference result, details may be as follows: The terminal device actually measures a reference signal at a target moment, and reports obtained channel state information to the first network element as the actual result. The terminal device inputs, into the first AI model, channel state information obtained by actually measuring the reference signal at a historical moment, to predict the channel state information at the target moment, and then reports the predicted channel state information at the target moment to the first network element as the inference result. The historical moment is before the target moment. Correspondingly, the first network element receives the actual result and the inference result from the terminal device. The reference signal may be specifically a channel state information reference signal (channel state information reference signal, CSI-RS). The foregoing technical solution provides an implementation in which the first network element obtains the actual result and the inference result in the channel state information prediction scenario. In this way, the first network element can monitor performance of the first AI model in the channel state information prediction scenario based on the actual result and the inference result.

In a possible implementation, in the channel state information compression scenario, the first AI model is a two-sided model. To be specific, the first AI model includes a first AI submodel and a second AI submodel, the first AI submodel is deployed in the terminal device, the second AI submodel is deployed in the first network element, and the first network element may be specifically a DU. When the first network element obtains the actual result and the inference result, details may be as follows: The terminal device actually measures the reference signal to obtain the channel state information, compresses the channel state information based on the first AI submodel, to obtain a compression result, and sends the compression result to the first network element. Correspondingly, the first network element receives the compression result from the terminal device, and decompresses the compression result based on the second AI submodel, to obtain the inference result. In addition, the terminal device further sends, to the first network element as the actual result, the channel state information obtained by actually measuring the reference signal. Correspondingly, the first network element receives the actual result from the terminal device. The foregoing technical solution provides an implementation in which the first network element obtains the actual result and the inference result in the channel state information compression scenario. In this way, the first network element can monitor performance of the first AI model in the channel state information compression scenario based on the actual result and the inference result.

In a possible implementation, that the first network element changes the first AI model includes: The first network element switches the first AI model to a second AI model. The first network element updates a parameter and/or structure in the first AI model. The first network element deactivates the first AI model. The first network element makes a communication network fall back from an AI mode to a non-AI mode. In the foregoing technical solution, the first network element may change the first AI model in a plurality of manners, to help improve communication quality.

According to a second aspect, this application provides a communication method, including: A fourth network element sends a monitoring indication to a third network element. Correspondingly, the third network element receives the monitoring indication from the fourth network element. The third network element monitors, based on the monitoring indication, a performance indicator that is of a terminal device and at which a function corresponding to a first AI model is implemented. When a value of a performance indicator of the first AI model meets a preset condition, the third network element indicates the fourth network element to change the first AI model. For example, the performance indicator that is of the terminal device and at which the function corresponding to the first AI model is implemented includes but is not limited to one or more of the following: a throughput, a data volume, a delay, and a packet loss rate.

In the foregoing technical solution, the fourth network element determines a terminal device whose AI mode is enabled, indicates, based on the monitoring indication, the third network element to monitor a performance indicator that is of the terminal device and at which the function corresponding to the first AI model is implemented, and when determining that a value of the performance indicator meets a preset condition, determine that inference performance of the AI model deteriorates, and therefore, indicate the fourth network element to change the first AI model. In this way, it can be quickly identified that the inference performance of the AI model deteriorates and a corresponding measure is taken, to help improve communication quality.

For example, the third network element is a CU, the fourth network element is a DU, the DU and the CU are connected through an F1 interface, and the DU may send a DU configuration update (DU configuration update) message to the CU through the F1 interface. The DU configuration update message includes the monitoring indication. To be specific, when an access network device (for example, a base station) is of a CU-DU separation architecture, the DU sends the monitoring indication to the CU when the AI mode is enabled, to indicate the CU to monitor performance of the terminal device whose AI mode is also enabled, and notify the DU when determining that the performance of the terminal device is abnormal. The DU further identifies a problem and optimizes a first AI model corresponding to the AI mode, so that network side performance monitoring and network side decision-making can be implemented in a scenario such as a channel state information prediction scenario or a channel state information compression scenario, to ensure overall network performance.

In a possible implementation, the monitoring indication includes an identifier of the terminal device and/or an identifier of a reference signal corresponding to the terminal device; and that the third network element monitors, based on the monitoring indication, the performance indicator that is of the terminal device and at which the function corresponding to the first AI model is implemented may be specifically: The third network element determines the terminal device based on the identifier of the terminal device and/or the identifier of the reference signal corresponding to the terminal device; and the third network element monitors the performance indicator that is of the terminal device and at which the function corresponding to the first AI model is implemented.

In the foregoing technical solution, the fourth network element may determine the terminal device whose AI mode is enabled currently, and indicate the terminal device to the fourth network element by using the identifier of the terminal device and/or the identifier of the reference signal corresponding to the terminal device. Therefore, the fourth network element may determine the terminal device whose AI mode is enabled, and monitor the performance indicator that is of the terminal device and at which the function corresponding to the first AI model is implemented.

In a possible implementation, the performance indicator is the throughput. When the value of the performance indicator of the first AI model meets the preset condition, that the third network element indicates the fourth network element to change the first AI model includes: The third network element obtains channel state information reported by the terminal device; the third network element determines a throughput corresponding to the channel state information based on the channel state information; and when determining that a monitored throughput of the terminal device is less than the throughput corresponding to the channel state information, the third network element indicates the fourth network element to change the first AI model.

In the foregoing technical solution, the third network element determines, based on channel state information obtained by the terminal device through measurement, a throughput (namely, a throughput threshold) corresponding to the channel state information, and uses the throughput corresponding to the channel state information as a standard for evaluating the first AI model. When determining that an actual throughput of the terminal device is less than the throughput corresponding to the channel state information, the third network element may determine that the inference performance of the AI model deteriorates. In this way, it can be quickly identified that the inference performance of the AI model deteriorates and a corresponding measure is taken.

In a possible implementation, that the third network element indicates the fourth network element to change the first AI model includes: The third network element indicates the fourth network element to perform one or more of the following: switching the first AI model to a second AI model; updating a parameter and/or structure in the first AI model; deactivating the first AI model; and making a communication network fall back from an AI mode to a non-AI mode. In this way, the fourth network element may change the first AI model in a plurality of manners, to help improve communication quality.

According to a third aspect, an embodiment of this application provides a communication apparatus. The apparatus has a function of implementing the first network element in any one of the first aspect or the possible implementations of the first aspect, and the first network element may be a DU.

The apparatus may also have a function of implementing the third network element in any one of the second aspect or the possible implementations of the second aspect, and the third network element may be a CU.

Functions of the communication apparatus may be implemented by hardware, or may be implemented by hardware executing corresponding software. The hardware or software includes one or more modules, units, or means (means) corresponding to the foregoing functions.

In a possible design, a structure of the apparatus includes a processing module and a transceiver module. The processing module is configured to support the apparatus to perform the method in any one of the first aspect or the possible implementations of the first aspect; or perform the method in any one of the second aspect or the possible implementations of the second aspect. The transceiver module is configured to support communication between the apparatus and another communication device. For example, when the apparatus is the first network element, the apparatus may receive configuration information from a second network element. The communication apparatus may further include a storage module. The storage module is coupled to the processing module, and stores program instructions and data that are necessary for the apparatus. In an example, the processing module may be a processor, the communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, so that the apparatus is enabled to perform the method in any one of the first aspect or the possible implementations of the first aspect, or perform the method in any one of the second aspect or the possible implementations of the second aspect. Optionally, the apparatus further includes a communication interface, and the processor is coupled to the communication interface.

According to a fourth aspect, an embodiment of this application provides a chip system, including a processor. The processor is coupled to a memory, the memory is configured to store a program or instructions, and when the program or the instructions are executed by the processor, the chip system is enabled to implement the method in any one of the first aspect or the possible implementations of the first aspect, or implement the method in any one of the second aspect or the possible implementations of the second aspect.

Optionally, the chip system further includes an interface circuit, and the interface circuit is configured to exchange code instructions with the processor.

Optionally, there may be one or more processors in the chip system, and the processor may be implemented by hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

According to a fifth aspect, an embodiment of this application provides a computer-readable storage medium. The computer-readable storage medium stores computer programs or instructions, and when the computer programs or the instructions are executed, a computer is enabled to perform the method in any one of the first aspect or the possible implementations of the first aspect, or perform the method in any one of the second aspect or the possible implementations of the second aspect.

According to a sixth aspect, an embodiment of this application provides a computer program product. When a computer reads and executes the computer program product, the computer is enabled to perform the method in any one of the first aspect or the possible implementations of the first aspect, or perform the method in any one of the second aspect or the possible implementations of the second aspect.

For technical effects that can be achieved in any one of the third aspect to the sixth aspect, refer to descriptions of beneficial effects in the first aspect or the second aspect. Details are not described herein again.

BRIEF DESCRIPTION OF DRAWINGS

FIG. 1 is a diagram of a communication system according to this application;
FIG. 2 and FIG. 3 are diagrams of model deployment according to this application;
FIG. 4a and FIG. 4b are diagrams of architectures of a communication system according to this application;
FIG. 5 is a diagram of an application of an AI model according to this application;
FIG. 6 is a diagram of a model in a channel state information compression scenario according to this application;
FIG. 7 is a diagram of a model in a channel state information prediction scenario according to this application;
FIG. 8 is a schematic flowchart of lifecycle management of an AI model according to this application;
FIG. 9 is a schematic flowchart of a first communication method according to this application;
FIG. 10 is a diagram of a format of an IE in a CU configuration update message according to this application;
FIG. 11 is a schematic flowchart of a second communication method according to this application;
FIG. 12 is a schematic flowchart of a third communication method according to this application;
FIG. 13 is a schematic flowchart of a fourth communication method according to this application;
FIG. 14 is a diagram of a structure of a communication apparatus according to this application; and
FIG. 15 is a diagram of a structure of another communication apparatus according to this application.

DESCRIPTION OF EMBODIMENTS

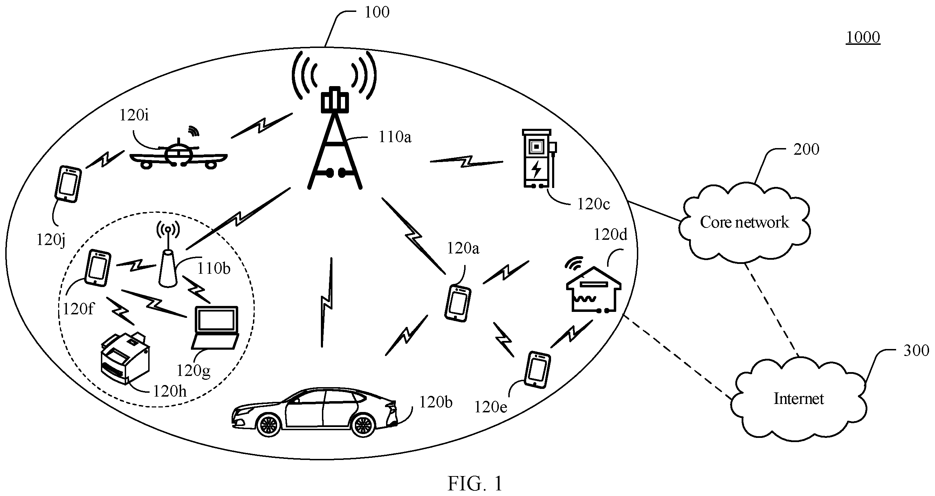

FIG. 1 is a diagram of an architecture of a communication system 1000 to which this application is applicable. As shown in FIG. 1, the communication system includes a radio access network 100 and a core network 200. Optionally, the communication system 1000 may further include an internet 300.

The radio access network 100 may include at least one access network device (for example, 110a and 110b in FIG. 1), and may further include at least one terminal device (for example, 120a to 120j in FIG. 1). The terminal device is connected to the access network device in a wireless manner, and the access network device is connected to the core network in a wireless or wired manner. A core network device and the access network device may be different physical devices that are independent of each other, functions of a core network device and logical functions of the access network device may be integrated into a same physical device, or a part of functions of a core network device and a part of functions of the access network device may be integrated into one physical device. Terminal devices may be connected to each other in a wired or wireless manner, and access network devices may be connected to each other in a wired or wireless manner. FIG. 1 is merely a diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in this application.

In this application, an apparatus configured to implement the functions of the access network device may be the access network device, or may be an apparatus that can support the access network device in implementing the functions, for example, a chip system, a hardware circuit, a software module, or a combination of a hardware circuit and a software module. The apparatus may be installed in the access network device, or may be matched with the access network device for use. In this application, the chip system may include a chip, or may include a chip and another discrete component.

Further, communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical layer, PHY) layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer. Optionally, the protocol layer structure between the access network device and the terminal device may further include an artificial intelligence (artificial intelligence, AI) layer used for transmission of data related to an AI function.

An access device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be divided based on protocol layers of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU. This is not limited.

Division into processing functions of the CU and the DU based on protocol layers is merely an example, and may be performed in another manner. For example, the CU or the DU may have more functions of protocol layers through division. For another example, the CU or the DU may have some processing functions of protocol layers through division. In a design, a part of functions of an RLC layer and a function of a protocol layer above the RLC layer are set on the CU, and a remaining function of the RLC layer and a function of a protocol layer below the RLC layer are set on the DU. In another design, functions of the CU or the DU may alternatively be divided based on service types or other system requirements. For example, division may be performed based on delays. Functions whose processing time needs to satisfy a delay requirement are set on the DU, and functions whose processing time does not need to satisfy the delay requirement are set on the CU. In another design, the CU may alternatively have one or more functions of the core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be divided at the physical layer. For example, the DU may implement higher-layer functions of the physical layer, and the RU may implement lower-layer functions of the physical layer. When sending is performed, functions of the physical layer may include at least one of the following: cyclic redundancy check (cyclic redundancy check, CRC) code addition, channel encoding, rate matching, scrambling, modulation, layer mapping, precoding, resource mapping, physical antenna mapping, or a radio frequency sending function. When receiving is performed, functions of the physical layer may include at least one of the following: CRC check, channel decoding, rate dematching, descrambling, demodulation, layer demapping, channel detection, resource demapping, physical antenna demapping, or a radio frequency receiving function. The higher-layer functions of the physical layer may include a part of functions of the physical layer. For example, the part of functions are closer to the MAC layer. The lower-layer functions of the physical layer may include another part of functions of the physical layer. For example, the part of functions are closer to the radio frequency function. For example, the higher-layer functions of the physical layer may include CRC code addition, channel encoding, rate matching, scrambling, modulation, and layer mapping, and the lower-layer functions of the physical layer may include precoding, resource mapping, physical antenna mapping, and the radio frequency sending function. Alternatively, the higher-layer functions of the physical layer may include CRC code addition, channel encoding, rate matching, scrambling, modulation, layer mapping, and precoding, and the lower-layer functions of the physical layer may include resource mapping, physical antenna mapping, and the radio frequency sending function. For example, the higher-layer functions of the physical layer may include CRC check, channel decoding, rate dematching, decoding, demodulation, and layer demapping, and the lower-layer functions of the physical layer may include channel detection, resource demapping, physical antenna demapping, and the radio frequency receiving function. Alternatively, the higher-layer functions of the physical layer may include CRC check, channel decoding, rate dematching, decoding, demodulation, layer demapping, and channel detection, and the lower-layer functions of the physical layer may include resource demapping, physical antenna demapping, and the radio frequency receiving function.

For example, functions of the CU may be implemented by one entity, or may be implemented by different entities. For example, functions of the CU may be further divided. That is, a control plane and a user plane are separated and implemented by using different entities, which are respectively a control plane CU entity (namely, a CU-CP entity) and a user plane CU entity (namely, a CU-UP entity). The CU-CP entity and the CU-UP entity may be connected through an E1 interface. The CU-CP entity and the CU-UP entity may be coupled to the DU, to jointly complete a function of the access network device. The control plane CU-CP of the CU further includes a further split architecture. That is, an existing CU-CP is further split into a CU-CP 1 and a CU-CP 2. The CU-CP 1 includes various radio resource management functions, and the CU-CP 2 includes only an RRC function and a PDCP-C function (that is, a basic function of control plane signaling at a PDCP layer).

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

The terminal device may also be referred to as a terminal, user equipment (user equipment, UE), a mobile station, a mobile terminal device, or the like. The terminal device may be widely used in communication in various scenarios, for example, including but not limited to at least one of the following scenarios: device-to-device (device-to-device, D2D), vehicle-to-everything (vehicle-to-everything, V2X), machine-type communication (machine-type communication, MTC), an internet of things (internet of things, IoT), virtual reality, augmented reality, industrial control, self-driving, telemedicine, smart grid, smart furniture, smart office, smart wear, smart transportation, or smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form used by the terminal device are not limited in this application.

In this application, an apparatus configured to implement the functions of the terminal device may be the terminal device, or may be an apparatus that can support the terminal device in implementing the functions, for example, a chip system, a hardware circuit, a software module, or a combination of a hardware circuit and a software module. The apparatus may be installed in the terminal device, or may be matched with the terminal device for use.

The access network device and the terminal device may be located in fixed locations, or may be movable. The access network device and/or terminal device may be deployed on land, including indoors or outdoors, or in a handheld manner or a vehicle-mounted manner, may be deployed on water, or may be deployed on an airplane, a balloon, or a man-made satellite in the air. Application scenarios of the access network device and the terminal device are not limited in this application. The access network device and the terminal device may be deployed in a same scenario or different scenarios. For example, the access network device and the terminal device are both deployed on the land; or the access network device is deployed on the land, and the terminal device is deployed on the water. Examples are not provided one by one.

Roles of the access network device and the terminal device may be relative. For example, a helicopter or an uncrewed aerial vehicle 120i in FIG. 1 may be configured as a mobile access network device. For the terminal device 120j that accesses the radio access network 100 via 120i, the terminal device 120i is an access network device. However, for the access network device 110a, 120i is a terminal device, that is, 110a and 120i communicate with each other based on a radio air interface protocol. Alternatively, 110a and 120i communicate with each other based on an interface protocol between the access network devices. In this case, for 110a, 120i is also an access network device. Therefore, both the access network device and the terminal device may be collectively referred to as communication apparatuses. 110a and 110b in FIG. 1 may be referred to as communication apparatuses having a function of the access network device, and 120a to 120j in FIG. 1 may be referred to as communication apparatuses having a function of the terminal device.

In this application, an independent network element (for example, referred to as an AI network element or an AI node) may be introduced into the communication system shown in FIG. 1, to implement an AI-related operation. The AI network element may be directly connected to the access network device in the communication system, or may be indirectly connected to the access network device via a third-party network element. The third-party network element may be a network element in a core network such as an authentication management function (authentication management function, AMF) or a user plane function (user plane function, UPF). Alternatively, an AI module (which may also be referred to as an AI function or an AI entity) may be configured in another network element in the communication system, to implement an AI-related operation. For example, the another network element may be an access network device (for example, a gNB), a core network device, or operation, administration, and maintenance (operation, administration, and maintenance, OAM). In this case, a network element that performs an AI-related operation is a network element in which an AI module is built. The OAM is configured to perform operation, management, maintenance, and the like on the access network device and/or the core network device. For example, when the AI module is located in the OAM, a current northbound interface may be reused for communication between the AI module and the access network device; or when the AI module is located in the access network device, current interfaces such as F1, Xn, and Uu may be reused; or when the AI module is an independent network entity, a communication link from the network entity to the OAM and the access network device needs to be re-established. The communication link may be a wired link or a wireless link.

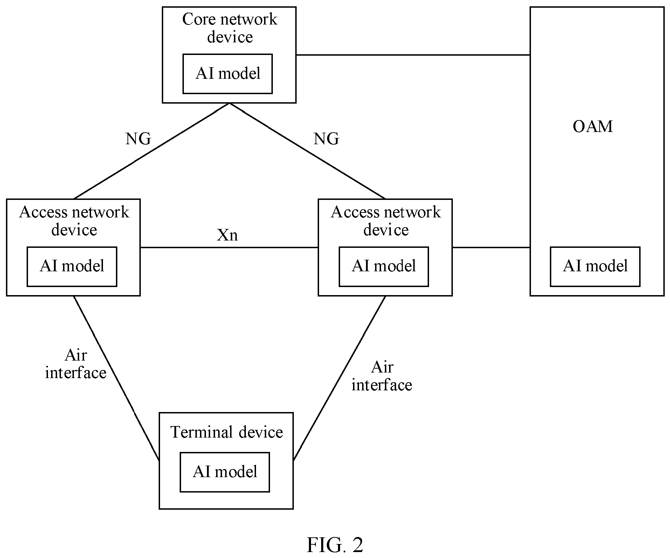

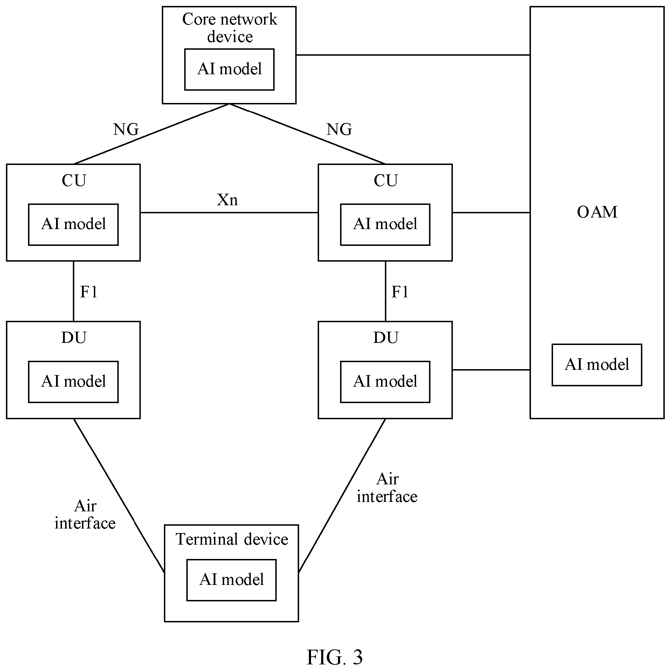

In this application, as shown in FIG. 2 or FIG. 3, an AI model may be deployed in at least one device in the core network device, the access network device, the terminal device, the OAM, or the like, and a corresponding function is implemented by using the AI model. The AI model represents a mapping relationship between an input and an output of the model. The AI model may be a neural network, a linear regression model, a decision tree model, a support vector machine (support vector machine, SVM), a Bayesian network, a Q-learning model, another machine learning model, or the like. In this application, the AI model may be used for load prediction, terminal device track prediction, channel state information prediction, optimal beam prediction, positioning prediction, and the like. The AI model may implement an AI-related algorithm, and the AI model may be implemented by using software, hardware, or a combination of software and hardware. In addition, the AI model may further perform policy inference from perspectives of network energy saving, mobility optimization, and the like based on a result of predicting network performance of the access network device by using a trained model, to obtain a proper and efficient energy saving policy, mobility optimization policy, and the like. In this application, the AI model may be referred to as a model for short.

In this application, AI models deployed in different nodes may be the same or different. That the models are different includes at least one of the following differences: a difference between structural parameters of the models, for example, a difference between quantities of layers, weight values, and/or the like of the models, a difference between input parameters of the models, a difference between output parameters of the models, or the like. The difference between input parameters of the models and/or the difference between output parameters of the models may be described as a difference between functions of the models. Different from FIG. 2, in FIG. 3, a function of the access network device is split into a CU and a DU. Optionally, the CU and the DU may be a CU and a DU in an O-RAN architecture. One or more AI models may be deployed in the CU, and/or one or more AI models may be deployed in the DU. Optionally, the CU in FIG. 3 may be further split into a CU-CP and a CU-UP. Optionally, one or more AI models may be deployed on the CU-CP, and/or one or more AI models may be deployed on the CU-UP. Optionally, in FIG. 2 or FIG. 3, OAM of the access network device and OAM of a core network device may be separately and independently deployed.

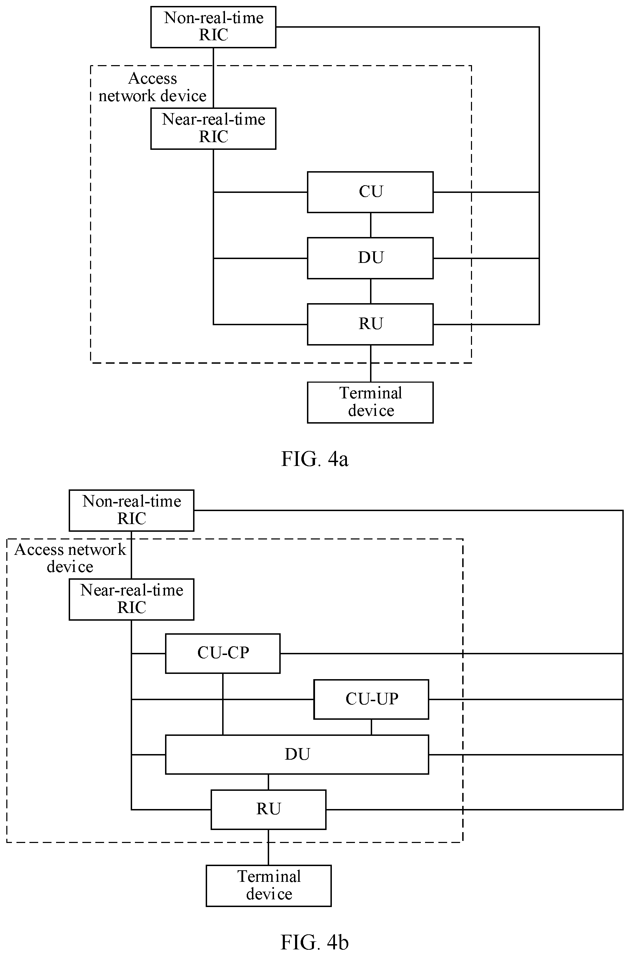

Optionally, FIG. 4a shows an architecture of a communication system according to this application.

In a first design, as shown in FIG. 4a, an access network device includes a near-real-time access network intelligent control (RAN intelligent controller, RIC) module, configured to perform model training and inference. For example, the near-real-time RIC may be configured to: train an AI model, and use the AI model for inference. For example, the near-real-time RIC may obtain information on a network side and/or a terminal device side from at least one of a CU, a DU, or an RU, and the information may be used as training data or inference data. Optionally, the near-real-time RIC may deliver an inference result to at least one of the CU, the DU, the RU, or a terminal device. Optionally, the CU and the DU may exchange the inference result. Optionally, the DU and the RU may exchange the inference result. For example, the near-real-time RIC delivers the inference result to the DU, and the DU forwards the inference result to the RU.

Alternatively, in a second design, as shown in FIG. 4a, a non-real-time RIC is included outside an access network device (optionally, the non-real-time RIC may be located in OAM or a core network device), and is configured to perform model training and inference. For example, the non-real-time RIC is configured to train an AI model and use the model for inference. For example, the non-real-time RIC may obtain information on a network side and/or a terminal device side from at least one of a CU, a DU, or an RU, and the information may be used as training data or inference data. An inference result may be delivered to at least one of the CU, the DU, the RU, or a terminal device. Optionally, the CU and the DU may exchange the inference result. Optionally, the DU and the RU may exchange the inference result. For example, the non-real-time RIC delivers the inference result to the DU, and the DU forwards the inference result to the RU.

Alternatively, in a third design, as shown in FIG. 4a, an access network device includes a near-real-time RIC, and a non-real-time RIC is included outside the access network device (optionally, the non-real-time RIC may be located in OAM or a core network device). As in the second design, the non-real-time RIC may be configured to perform model training and inference. Alternatively, as in the first design, the near-real-time RIC may be configured to perform model training and inference. Alternatively, the non-real-time RIC performs model training, and the near-real-time RIC may obtain AI model information from the non-real-time RIC, obtain information on a network side and/or a terminal device side from at least one of a CU, a DU, or an RU, and obtain an inference result based on the information and the AI model information. Optionally, the near-real-time RIC may deliver the inference result to at least one of the CU, the DU, the RU, or a terminal device. Optionally, the CU and the DU may exchange the inference result. Optionally, the DU and the RU may exchange the inference result. For example, the near-real-time RIC delivers the inference result to the DU, and the DU forwards the inference result to the RU. For example, the near-real-time RIC is configured to train a model A and use the model A for inference. For example, the non-real-time RIC is configured to: train a model B, and use the model B for inference. For example, the non-real-time RIC is configured to: train a model C, and send information about the model C to the near-real-time RIC, and the near-real-time RIC uses the model C for inference.

FIG. 4b is an architecture of another communication system according to this application. Compared with FIG. 4a, in FIG. 4b, a CU is separated into a CU-CP and a CU-UP.

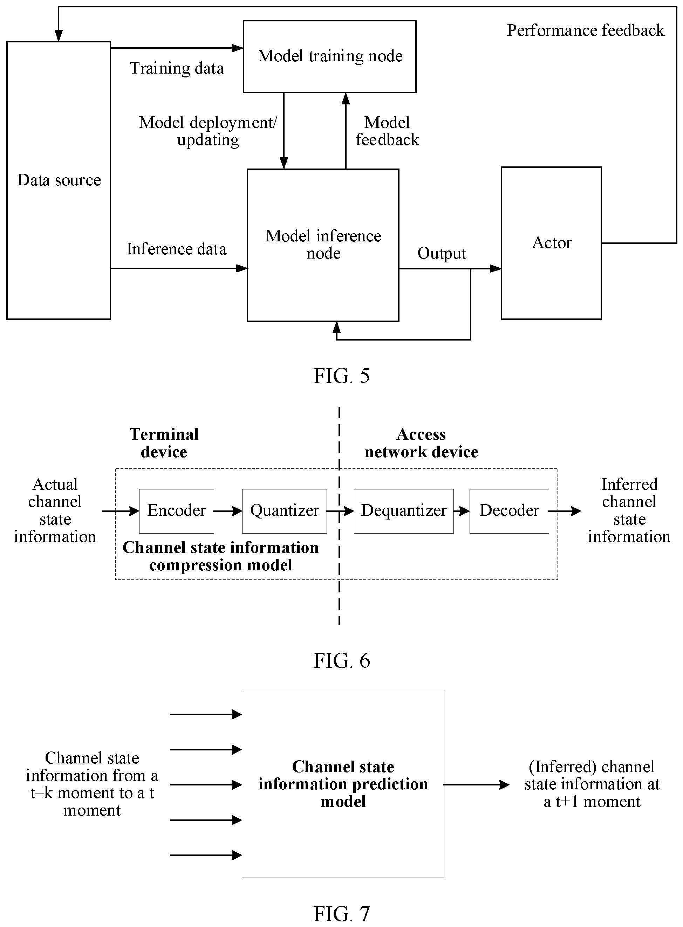

FIG. 5 is a diagram of an application architecture of an AI model. A data source (data source) is configured to store training data and inference data. A model training node (model training host) analyzes or trains training data (training data) provided by the data source, to obtain an AI model, and deploys the AI model in a model inference node (model inference host). Optionally, the model training node may further update the AI model that is deployed in the model inference node. The model inference node may further feed back related information of the deployed model to the model training node, so that the model training node performs optimization, updating, or the like on the deployed AI model.

Obtaining the AI model through learning by the model training node is equivalent to obtaining a mapping relationship between an input and an output of the model obtained through learning by the model training node based on the training data. The model inference node uses the AI model to perform inference based on the inference data provided by the data source, to obtain an inference result. The method may alternatively be described as follows: The model inference node inputs the inference data to the AI model, and obtains the output by using the AI model. The output is the inference result. The inference result may indicate a configuration parameter used (executed) by an actor object, and/or an operation performed by the actor object. The inference result may be planned by an actor (actor) entity in a unified manner, and sent to one or more actor objects (for example, network entities) for execution. Optionally, the actor entity or the actor object may feed back a parameter or a measurement amount collected by the actor entity or the actor object to the data source. This process may be referred to as performance feedback, and the fed-back parameter may be used as training data or inference data. Optionally, the actor entity or the actor object may further determine, based on the inference result output by the model inference node, feedback information related to model performance, and feed back the feedback information to the model inference node. The model inference node may feed back performance information, and the like of the model to the model training node based on the feedback information, so that the model training node performs optimization, updating, or the like on the deployed AI model. This process may be referred to as model feedback.

Currently, the 3rd generation partnership project (the 3rd generation partnership project, 3GPP) introduces discussion of an AI application scenario (AI use case). There are the following three AI application scenarios:

(1) Channel state information feedback enhancement (CSI feedback enhancement) scenario

Channel state information is a channel attribute of a communication link. A terminal device reports the channel state information to an access network device, so that the access network device selects a more suitable modulation and coding scheme (modulation and coding scheme, MCS) for the terminal device. The MCS is used to transmit data between the access network device and the terminal device.

The channel state information feedback enhancement scenario may specifically include two scenarios: a channel state information compression scenario and a channel state information prediction scenario.

The channel state information compression scenario is implemented based on a two-sided model (two-sided (AI/ML) model). FIG. 6 is a diagram of an example model. The two-sided model (namely, a channel state information compression model) includes an encoder and a quantizer on a terminal device side, and a decoder and a dequantizer on an access network device side. An input of the encoder is channel state information obtained by the terminal device by measuring a reference signal, and a representation form of the channel state information may be a feature vector, or the like obtained by decomposing an original channel matrix/a precoded channel matrix/a pair channel. An output of the encoder is a floating-point number vector carrying compressed channel state information. Further, the quantizer maps the floating-point number vector carrying the compressed channel state information onto a quantized bit sequence (a possible quantization manner includes scalar quantization, vector quantization, or the like). Functions of the decoder and the dequantizer are opposite to functions of the encoder and the quantizer, and the channel state information output by the decoder may be considered as inferred channel state information. For example, the encoder or the decoder may be implemented by using an AI model such as a convolutional neural network (convolutional neural network, CNN) or a transformer. In this application, processes performed by the encoder and the quantizer on the terminal device side may be collectively referred to as a compression process, and processes performed by the decoder and the dequantizer on the access network device side may be collectively referred to as a decompression process.

The channel state information prediction scenario is implemented based on a one-sided model (one-sided (AI/ML) model) deployed on the terminal device side. FIG. 7 is a diagram of an example model. An input of the one-sided model (namely, a channel state information prediction model) is channel state information at a plurality of historical moments (a moment t-k to a moment t shown in FIG. 7, and both k and t are positive integers), and an output of the one-sided model is channel state information (namely, inferred channel state information) at a target moment (a moment t+1 shown in FIG. 7). The one-sided model may be specifically a multilayer perceptron (multilayer perceptron, MLP).

(2) Beam management (beam management, BM) scenario

The BM scenario is implemented based on a one-sided model, and is mainly used to find a strongest transmit/receive beam pair (beam pair). The one-sided model may be deployed on a network side (for example, in an access network device), or may be deployed in a terminal device.

When the model is deployed on a terminal device side, the model is used to predict an optimal beam on an access network device side. The model may be provided by the terminal device or delivered by the network side to the terminal device. In a model use process, the terminal device measures a downlink synchronization signal block (synchronization signal block, SSB) and a channel state information reference signal (channel state information-reference signal, CSI-RS), to obtain angle domain information of a channel; inputs the angle domain information of the channel into the model, to infer top k beams (for example, first k beams in reference signal received power (reference signal received power, RSRP) rankings, where k is a positive integer) in a plurality of beams; and feeds back identifiers of the top k inferred beams to the access network device (used for a second round of scanning and determining of a subsequent optimal beam).

When the model is deployed on the network side, the model performs beam prediction based on channel angle domain information measured by the terminal device, for example, performs prediction based on a beam RSRP measured by the terminal device. The access network device scans a part of beams in a full codebook (namely, sparse beam scanning). The terminal device measures a sparse beam, to obtain an RSRP, and feeds back the RSRP to the access network device. The access network device inputs the obtained RSRP into the model, determines top k beams (for example, first k beams in RSRP rankings, where k is a positive integer), and performs a second round of scanning on the top k beams. The terminal device reports an optimal beam in the second round after measurement.

(3) Positioning accuracy enhancement (positioning accuracy enhancements) scenario

The positioning accuracy enhancement scenario is implemented based on a one-sided model. A line of sight (line of sight, LOS)/non line of sight (non line of sight, NLOS) can be identified based on AI, thereby improving positioning accuracy in a case of a small quantity of transmission reception point (transmission reception point, TRP) antennas. For example, in an indoor scenario (which may be represented as a heavy NLOS scenario in English), there may be no enough quantity of LOS paths, and the terminal device can improve positioning accuracy in the indoor scenario through AI model-based positioning.

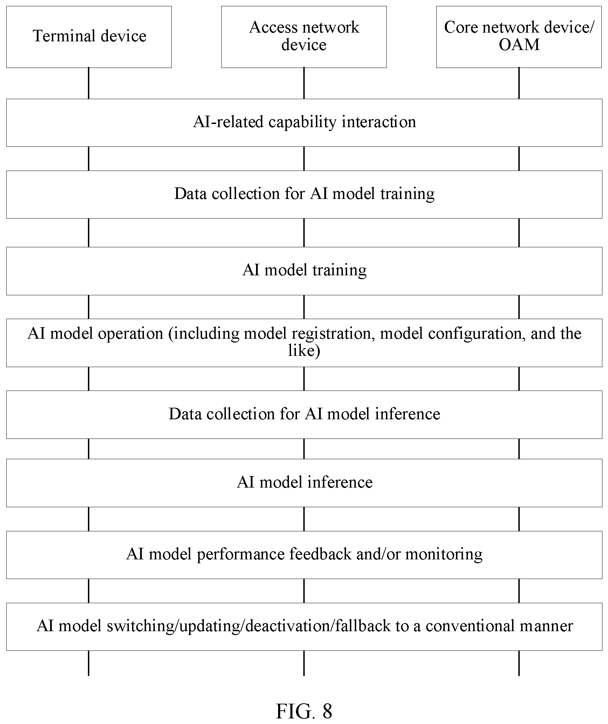

Lifecycle management (lifecycle management, LCM) of an AI model is management of the AI model in an entire process from a start to an end. It can be understood as steps/procedures/policies that needs to be followed by an organization/individual when using AI to obtain actual commercial value. A possible overall signaling procedure of LCM of the AI model may include: AI-related capability interaction, data collection for AI model training, AI model training, AI model operation (including model registration, model configuration, and the like), data collection for AI model inference, AI model inference, AI model performance feedback and/or monitoring, and AI model switching/updating/deactivation/fallback to a conventional manner. For details, refer to FIG. 8.

In the foregoing AI model performance feedback and/or monitoring, how to quickly identify that inference performance (or referred to as computing performance, model performance, prediction performance, or the like) of the AI model deteriorates is a technical problem to be urgently resolved currently.

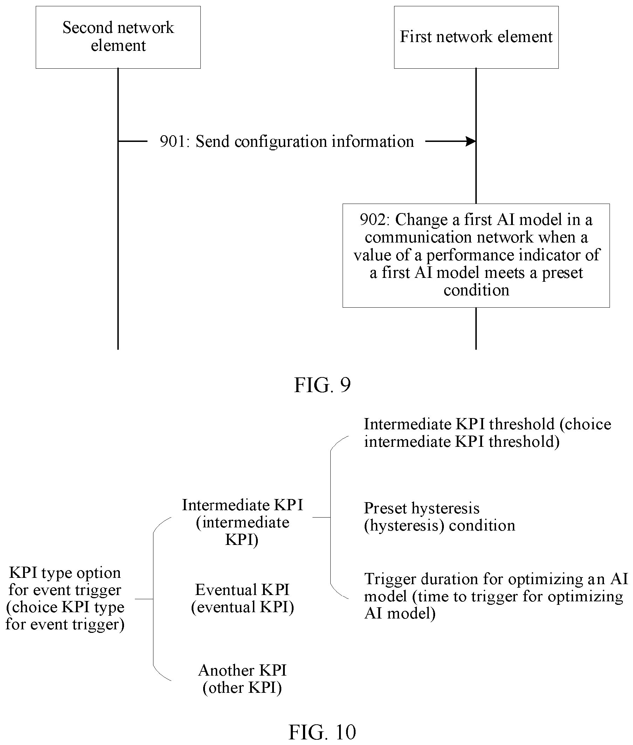

FIG. 9 is a schematic flowchart of a communication method according to an example of this application. When a communication network is in an AI mode, inference performance of a first AI model associated with the AI mode is monitored, and the first AI model in the communication network is modified when it is identified that the inference performance of the AI model deteriorates.

The first AI model is explained in advance as follows: The first AI model is deployed in a model inference entity (or referred to as a model inference node), and there may be one or more model inference entities. For example, when the first AI model is used in a channel state information prediction scenario and a beam management scenario, the first AI model is a one-sided model, and the first AI model may be deployed on a terminal device side; or when the first AI model is used in a positioning accuracy enhancement scenario, the first AI model is a one-sided model, and the first AI model may be deployed in a terminal device, an access network device (for example, a DU), or a location management function (location management function, LMF); or when the first AI model is used in a channel state information compression scenario, the first AI model is a two-sided model. It may be understood that the two-sided model specifically includes a first AI submodel deployed in the terminal device and a second AI submodel deployed in the access network device (for example, the DU).

Step 901: A second network element sends configuration information to a first network element, and correspondingly, the first network element receives the configuration information from the second network element, where the configuration information includes a performance indicator and a preset condition corresponding to the performance indicator.

The second network element may also be referred to as a configuration network element, for example, OAM, a core network device, or a CU. The first network element is configured to monitor performance of the first AI model, and the first network element is, for example, a DU or an RU.

For example, when the second network element is a CU and the first network element is a DU, it may be considered that an architecture of the access network device is of a CU-DU separation architecture, and the CU and the DU communicates through an F1 interface. For example, the CU may use a CU configuration update (CU configuration update) message to carry the configuration information, and deliver the CU configuration update message to the DU.

The configuration information includes one or more performance indicators. In this application, the performance indicator may also be referred to as a computing performance indicator, an inference performance indicator, or the like. The performance indicator may be specifically a key performance indicator (key performance indicator, KPI). For example, the configuration information may include one or more of the following plurality of KPIs: an intermediate KPI (intermediate KPI), an eventual KPI (eventual KPI), and another KPI (another KPI).

Further, the intermediate KPI may include one or more of the following indicators: a squared generalized cosine similarity (squared generalized cosine similarity, SGCS), a normalized mean square error (normalized mean square error, NMSE), a spatial chordal distance (chordal distance), a Euclidean distance, a relative achievable rate (relative achievable rate, RAR), an input data distribution indicator (for example, probability density function (probability density function, PDF), skewness, kurtosis, mean, or variance), and the like. The eventual KPI may include one or more of the following indicators: a throughput (throughput), an air interface load (payload), a model inference delay, model inference accuracy, a block error rate (block error ratio, BLER), and the like. The another KPI may include one or more of the following indicators: computing complexity, overheads, power consumption, storage, and the like.

It may be understood that the foregoing KPI is merely an example for description. In this application, a new indicator may be obtained by combining the plurality of indicators. For example, the eventual KPI further includes a ratio of air interface load (payload)/throughput (throughput). The ratio may be denoted as alpha. That is, alpha=throughput/payload. The ratio may be the eventual KPI.

Optionally, the configuration information includes one performance indicator, the one performance indicator is specifically one intermediate KPI, and the one intermediate KPI is, for example, an SGCS; or the configuration information includes two performance indicators, the two performance indicators are specifically one intermediate KPI and one eventual KPI, the one intermediate KPI is, for example, an SGCS, and the one eventual KPI is, for example, a throughput; or the configuration information includes three performance indicators, the three performance indicators are specifically one intermediate KPI, one eventual KPI, and one another KPI, the one intermediate KPI is, for example, an SGCS, the one eventual KPI is, for example, a throughput, and the one another KPI is, for example, computing complexity. Certainly, the one or more performance indicators included in the configuration information may alternatively be in another form. This is not limited in this application.

Further, the configuration information further includes a preset condition of the one or more performance indicators. One performance indicator is used as an example. A preset condition of the performance indicator may include: A value of the performance indicator is greater than a threshold corresponding to the performance indicator, or a value of the performance indicator is less than a threshold corresponding to the performance indicator, or a value of the performance indicator falls within a preset interval, or a value of the performance indicator does not fall within a preset interval. For example, the performance indicator is an SGCS, and a preset condition of the SGCS is that a value of the SGCS is less than an SGCS threshold, and the SGCS threshold is, for example, 0.8.

Optionally, the preset condition of the performance indicator further includes preset duration (which may be expressed as time to trigger for optimizing AI model in English), for example, includes corresponding preset duration when the value of the performance indicator is greater than the threshold corresponding to the performance indicator, or corresponding preset duration when the value of the performance indicator is less than the threshold corresponding to the performance indicator, or corresponding preset duration when the value of the performance indicator falls within the preset interval, or corresponding preset duration when the value of the performance indicator does not fall within the preset interval.

Optionally, the preset condition of the performance indicator further includes a preset hysteresis (hysteresis) condition, and the preset hysteresis condition is used in an entering condition and a leaving condition of an event trigger condition, to improve system robustness and avoid false reporting in a case of a jitter.

When the CU sends the configuration information to the DU, a possible format of an information element (information element, IE) in the CU configuration update message may be shown in FIG. 10. Specifically, the CU configuration update message includes a KPI type option for event trigger (choice KPI type for event trigger), a next level of the choice KPI type for event trigger includes an intermediate KPI, an eventual KPI, and another KPI, and a next level of the intermediate KPI includes an intermediate KPI threshold (choice intermediate KPI threshold), a preset hysteresis (hysteresis) condition, and trigger duration for optimizing an AI model (time to trigger for optimizing AI model).

Step 902: The first network element changes the first AI model in the communication network when a value of a performance indicator of the first AI model meets the preset condition.

Specifically, when the configuration information includes one performance indicator:

The first network element determines the value of the performance indicator of the first AI model, and if the first network element determines that the value of the performance indicator of the first AI model meets the preset condition corresponding to the performance indicator, the first network element changes the first AI model in the communication network; or if the first network element determines that the value of the performance indicator of the first AI model does not meet the preset condition corresponding to the performance indicator, the first network element does not need to change the first AI model in the communication network, in other words, continues to use the first AI model in the communication network.

When the configuration information includes a plurality of performance indicators:

In a possible manner, the first network element determines values of the plurality of performance indicators of the first AI model, and if the first network element determines that the values of the plurality of performance indicators of the first AI model meet respective corresponding preset conditions, the first network element changes the first AI model in the communication network; or if the first network element determines that values of one or more of the plurality of performance indicators of the first AI model meet a preset condition corresponding to the performance indicators, the first network element does not need to change the first AI model in the communication network, in other words, continues to use the first AI model in the communication network. For example, two performance indicators included in the configuration information are an SGCS and a throughput. If the first network element determines that a value of the SGCS of the first AI model meets a preset condition of the SGCS, and a value of the throughput meets a preset condition of the throughput, the first network element changes the first AI model in the communication network; or if the first network element determines that a value of the SGCS of the first AI model does not meet a preset condition of the SGCS, and/or a value of the throughput does not meet a preset condition of the throughput, the first network element does not need to change the first AI model in the communication network, in other words, continues to use the first AI model in the communication network.

In another possible manner, the first network element determines values of the plurality of performance indicators of the first AI model, and if the first network element determines that values of one or more of the plurality of performance indicators of the first AI model meet respective corresponding preset conditions, the first network element changes the first AI model in the communication network; or if the first network element determines that none of the values of the plurality of performance indicators of the first AI model meets respective corresponding preset conditions, the first network element does not need to change the first AI model in the communication network, in other words, continues to use the first AI model in the communication network. For example, two performance indicators included in the configuration information are an SGCS and a throughput. If the first network element determines that a value of the SGCS of the first AI model meets a preset condition of the SGCS, and/or a value of the throughput meets a preset condition of the throughput, the first network element changes the first AI model in the communication network; or if the first network element determines that a value of the SGCS of the first AI model does not meet a preset condition of the SGCS, and a value of the throughput does not meet a preset condition of the throughput, the first network element does not need to change the first AI model in the communication network, in other words, continues to use the first AI model in the communication network.

In still another possible manner, the first network element determines values of the plurality of performance indicators of the first AI model, and if the first network element determines that values that are of the plurality of performance indicators of the first AI model and that meet respective corresponding preset conditions account for a proportion greater than a proportion threshold, the first network element changes the first AI model in the communication network; or if the first network element determines that values that are of the plurality of performance indicators of the first AI model and that meet respective corresponding preset conditions account for a proportion less than or equal to a proportion threshold, the first network element does not need to change the first AI model in the communication network, in other words, continues to use the first AI model in the communication network. For example, three performance indicators included in the configuration information are an SGCS, a throughput, and computing complexity, and the proportion threshold is 0.5. If the first network element determines that a value of the SGCS of the first AI model meets a preset condition of the SGCS, a value of the throughput meets a preset condition of the throughput, and the computing complexity does not meet a preset condition of the computing complexity, the first network element changes the first AI model in the communication network; or if the first network element determines that a value of the SGCS of the first AI model meets a preset condition of the SGCS, a value of the throughput does not meet a preset condition of the throughput, and the computing complexity does not meet a preset condition of the computing complexity, the first network element does not need to change the first AI model in the communication network, in other words, continues to use the first AI model in the communication network.

That the first network element changes the first AI model in the communication network may be specifically one of the following:

(1) The first network element switches the first AI model to a second AI model.

For example, both the first AI model and the second AI model are one-sided models and are configured in the terminal device.

Alternatively, both the first AI model and the second AI model are one-sided models and are configured in the DU.

Alternatively, both the first AI model and the second AI model are two-sided models, and two submodels of the two-sided model are separately configured in the terminal device and the DU. To be specific, the first AI model includes a first AI submodel and a second AI submodel, the second AI model includes a third AI submodel and a fourth AI submodel, the first AI submodel and the third AI submodel are configured in the terminal device, and the third AI submodel and the fourth AI submodel are configured in the DU.

(2) The first network element updates a parameter and/or structure in the first AI model.

(3) The first network element deactivates (deactivates) the first AI model.

For example, when the first network element deactivates the first AI model in the communication network, the model inference entity (for example, the terminal device or the DU) in which the first AI model is located may further update the first AI model based on collected data, activate the first AI model again based on an indication of the first network element, and continue to perform inference based on the first AI model.

(4) Make the communication network fall back (fall back) from an AI mode to a non-AI mode.

In addition, a specific implementation in which the first network element changes the first AI model in the communication network may be another manner. For example, the current first AI mode of the communication network is switched to the second AI mode. This is not limited in this application.

Optionally, when the first AI model is a one-sided model, if the first AI model is deployed in the terminal device, the first network element may send a change indication to the terminal device, to indicate the terminal device to change the first AI model in the terminal device; or if the first AI model is deployed in the DU, the first network element may send a change indication to the DU, to indicate the DU to change the first AI model in the DU. In addition, when the first network element is a DU, the first network element directly changes the first AI model in the first network element.

When the first AI model is a two-sided model, if the first AI submodel is deployed in the terminal device, and the second AI submodel is deployed in the DU, the first network element sends a first change indication to the terminal device, to indicate the terminal device to change the first AI submodel in the terminal device, and the first network element sends a second change indication to the DU, to indicate the DU to change the second AI submodel in the DU. It may be understood that the first AI submodel and the second AI submodel are models corresponding to each other. Therefore, the first change indication sent by the first network element to the terminal device and the second change indication sent by the first network element to the DU correspond to each other. For example, the first change indication indicates the terminal device to switch the first AI submodel to the third AI submodel, and the second change indication indicates the DU to switch the second AI submodel to the fourth AI submodel. For another example, the first change indication indicates the terminal device to deactivate the first AI submodel, and the second change indication indicates the DU to deactivate the second AI submodel. In addition, when the first network element is a DU, the first network element directly changes the second AI submodel in the first network element, and sends the first change indication to the terminal device.

Optionally, the first network element is a DU, and the change indication (or the first change indication) sent by the DU to the terminal device may be carried in an RRC configuration (RRC reconfiguration) message. Optionally, in the RRC reconfiguration message, the DU may use different identifiers to indicate switching, update, deactivation, and fallback. For example, the RRC reconfiguration message includes 2 bits. When values of the 2 bits are 11, 10, 01, and 00, the 2 bits indicate switching, update, deactivation, and fallback.

When the first network element obtains the value of the performance indicator of the first AI model, there may be specifically the following two possible implementations:

In an implementation 1 in which the first network element obtains the value of the performance indicator of the first AI model, the first network element obtains an actual result and an inference result, and determines the value of the performance indicator of the first AI model based on the actual result and the inference result.

The inference result is obtained, through inference based on the first AI model, by the model inference entity (for example, the terminal device or the DU) in which the first AI model is located. The actual result is obtained based on actual measurement of a device in the communication network.

The following separately uses the channel state information prediction scenario, the channel state information compression scenario, a beam management enhancement scenario, and the positioning accuracy enhancement scenario as examples to provide descriptions.

In the channel state information prediction scenario:

The first AI model is a one-sided model, the first AI model is deployed in the terminal device, and the inference result is obtained by the terminal device through inference based on the first AI model. Specifically, the terminal device may measure a downlink reference signal at each of a plurality of moments, to obtain channel state information (namely, channel state information at a plurality of historical moments) respectively corresponding to the plurality of moments. Then, the terminal device predicts channel state information (namely, inferred channel state information or the inference result) at a target moment based on the channel state information at the plurality of the historical moments and the first AI model. The plurality of historical moments are before the target moment. Then, the terminal device sends the inferred channel state information at the target moment to the first network element. Correspondingly, the first network element may receive the inferred channel state information at the target moment from the terminal device. Further, the terminal device may further measure the downlink reference signal at the target moment, to obtain the channel state information (namely, actual channel state information or the actual result) at the target moment. Then, the terminal device sends the actual channel state information at the target moment to the first network element, and the first network element may receive the actual channel state information at the target moment from the terminal device.

In a specific implementation, one slot may include N moments. The terminal device may measure the downlink reference signal at each of N moments included in each of M slots, to obtain channel state information (namely, channel state information at M×N historical moments) respectively corresponding to M×N moments. Then, the terminal device predicts inferred channel state information (namely, an inference result) at the N target moments in a target slot based on the channel state information at the M×N historical moments and the first AI model. Similarly, the terminal device may measure the downlink reference signal at each of the N target moments in the target slot, to obtain actual channel state information at the N target moments. M and N are positive integers.

For example, the performance indicator is the SGCS, and the preset condition corresponding to the SGCS includes that the value of the SGCS is less than the SGCS threshold. The first network element determines the SGCS based on the inferred channel state information at the N target moments and the actual channel state information at the N target moments. For example, the first network element determines the SGCS based on a relational expression 1. The relational expression 1 is as follows:

$$\mathrm{SGCS} = \mathrm{E}\left\{ \frac{1}{N} \sum_{i=1}^{N} \sum_{j} \frac{\lambda_i^j}{\sum_{k=1}^{K} \lambda_i^k} \left( \frac{||\widetilde{w}_i^{j^H} w_i^j||}{||\widetilde{w}_i^j|| \, ||w_i^j||} \right)^2 \right\}$$

Herein, $w_i^j$ is a $j^{\mathrm{th}}$ feature vector in actual channel state information at an $i^{\mathrm{th}}$ moment, K is a rank, and $\widetilde{w}_i^j$ is a $j^{\mathrm{th}}$ feature vector in inferred channel state information at the $i^{\mathrm{th}}$ moment. N represents a total quantity of moments (or a total quantity of resource units), i is an integer in [1, N], $E\{\cdot\}$ represents an operation of averaging a plurality of samples, and $\lambda_i^j$ is a feature value of a channel covariance matrix corresponding to $w_i^j$. Herein, i, j, and N are all positive integers.

For example, if the first network element determines that the value of the SGCS is less than the SGCS threshold, the first network element changes the first AI model in the communication network. If the first network element determines that the value of the SGCS is greater than or equal to the SGCS threshold, the first network element determines that the first AI model in the communication network does not need to be changed, in other words, the first AI model in the communication network continues to be used.

Optionally, the preset condition corresponding to the SGCS further includes corresponding preset duration in which the value of the SGCS is less than the SGCS threshold (or referred to as trigger duration for optimizing an AI model (time to trigger for optimizing AI model)). Correspondingly, if the first network element determines that duration in which the value of the SGCS is less than the SGCS threshold reaches the preset duration, the first network element may determine to change the first AI model in the communication network; or if the first network element determines that duration in which the value of the SGCS is less than the SGCS threshold does not reach the preset duration, the first AI model continues to be used in the communication network.

In addition, the preset condition corresponding to the SGCS further includes the preset hysteresis condition, and the preset hysteresis condition may specifically include a hysteresis value. For example, the trigger condition is set to Ms+Hys<Thresh. Herein, Ms represents the value of the SGCS, Hys represents the hysteresis value, and thresh represents the SGCS threshold. For example, the SGCS threshold is configured as 0.85, and the hysteresis value is 0.05. If current inference performance is good, and the value of the SGCS computed by the first network element is 0.83, 0.83+0.05<0.85 is a false condition (to be specific, 0.83+0.05=0.88, 0.88 is greater than 0.85, and therefore, the trigger condition is not met). Therefore, the first network element does not change the first AI model in the communication network. To be specific, although the value of the SGCS is less than the SGCS threshold, a sum of the value of the SGCS and the hysteresis value is greater than the SGCS threshold (that is, the preset hysteresis condition is not met). Therefore, the first network element does not change the first AI model in the communication network. It is further assumed that the current inference performance deteriorates, the value of the SGCS computed by the first network element is 0.6, and 0.6+0.05<0.85 is a true condition (that is, the trigger condition is met). Therefore, the first network element needs to change the first AI model in the communication network. In a possible manner, when the sum of the hysteresis value and the value of the SGCS computed by the first network element is less than the SGCS threshold and duration reaches the preset duration, the first network element needs to change the first AI model in the communication network. This helps improve system robustness.

In the channel state information compression scenario:
The first AI model is a two-sided model, the first AI submodel is deployed in the terminal device, the second AI submodel is deployed in the DU, and the inference result is obtained by the terminal device through inference based on the first AI submodel and obtained by the DU based on the second AI submodel. Specifically, after the terminal device measures the downlink reference signal at a moment, to obtain channel state information at the moment, the terminal device may compress the channel state information based on the first AI submodel to obtain compressed channel state information (namely, a compression result), and then send the compression result to the DU through an air interface. Correspondingly, after receiving the compression result, the DU may decompress the compression result based on the second AI submodel. An obtained decompression result is inferred channel state information (or an inference result). Further, the terminal device may further use, as the actual result, the actual channel state information obtained by the terminal device through actual measurement.

For example, the first network element obtains the actual result from the terminal device, and obtains the inference result from the DU. For another example, the first network element is a DU, and the terminal device reports the actual result to the DU.

In a specific implementation, one slot may include N moments. The terminal device may measure the N moments in the slot to obtain N pieces of channel state information (namely, an actual result), and compress the N pieces of channel state information to obtain a compression result. Similarly, after receiving the compression result, the DU may decompress the compression result to obtain N pieces of inferred channel state information (namely, an inference result). For example, the performance indicator is the SGCS. For specific implementation in which the first network element determines the SGCS based on the inferred channel state information and the actual channel state information, refer to descriptions of the channel state information prediction scenario.

In the beam management enhancement scenario:
The first AI model is a one-sided model, the first AI model is deployed in the terminal device, and the inference result is top k beams (for example, first k beams that are in RSRP rankings and that are obtained through inference) obtained by the terminal device through inference based on the first AI model and after the terminal device scans a small part of beams transmitted by the access network device. The actual result is top k beams determined by the access network device. Further, the performance indicator is inference accuracy, and a preset condition corresponding to the inference accuracy is that the inference accuracy is less than an accuracy threshold. The first network element determines the inference accuracy based on actual top k beams in the access network device and the top k beams obtained by the terminal device through inference.

For example, if the first network element determines that the inference accuracy is less than the accuracy threshold (in other words, a preset condition corresponding to the inference accuracy is met), the first network element needs to change the first AI model in the communication network; or if the first network element determines that the inference accuracy is greater than or equal to the accuracy threshold (in other words, a met preset condition corresponding to the inference accuracy is not met), the first network element determines that the first AI model in the communication network does not need to be changed, in other words, the first AI model continues to be used in the communication network.

Optionally, the preset condition corresponding to the inference accuracy further includes the preset duration and/or the preset hysteresis condition. For a specific implementation, refer to the descriptions in the channel state information prediction scenario.

In the positioning accuracy enhancement scenario:

The first AI model is a one-sided model, and the first AI model is deployed in the DU. Further, in AI assisted positioning (AI assisted positioning), the first network element may obtain an inferred LOS/NLOS identification rate predicted by the access network device based on the first AI model, and use the LOS/NLOS identification rate as the performance indicator. Correspondingly, a preset condition corresponding to the LOS/NLOS identification rate in the configuration information is that the LOS/NLOS identification rate is less than an identification rate threshold. For example, the first network element may be a DU. Further, the first network element may define a case in which the LOS/NLOS identification rate meets a relational expression 2. The relational expression 2 is as follows:

$$\text{Identification rate } P_r = P_r(\text{LOS} \to \text{LOS}) * R_{LOS} + P_r(\text{NLOS} \to \text{NLOS}) * R_{NLOS}$$

The identification rate $P_r$ is the LOS/NLOS identification rate, $P_r(LOS \to LOS)$ is a probability of identifying LOS path data as an LOS path, $R_{LOS}$ is a percentage of LOS path data in a data set, $P_r(\text{NLOS} \to \text{NLOS})$ is a probability of identifying NLOS path data as an NLOS path, and $R_{NLOS}$ is a percentage of NLOS path data in the data set.

For example, if the first network element determines that the LOS/NLOS identification rate is less than the identification rate threshold (in other words, the preset condition corresponding to the LOS/NLOS identification rate is met), the first network element needs to change the first AI model in the communication network; or if the first network element determines that the LOS/NLOS identification rate is greater than or equal to the identification rate threshold (in other words, the preset condition corresponding to the LOS/NLOS identification rate is not met), the first network element determines that the first AI model in the communication network does not need to be changed, and the first AI model continues to be used in the communication network. Optionally, for a specific implementation in which the preset condition corresponding to the LOS/NLOS identification rate further includes the preset duration and/or the preset hysteresis condition, refer to the descriptions in the channel state information prediction scenario.

In an implementation 2 in which the first network element obtains the value of the performance indicator of the first AI model, the first network element monitors the value of the performance indicator of the first AI model. The performance indicator is, for example, the throughput, the air interface load, the model inference delay, the block error rate, or the ratio of air interface load/throughput.

For example, the performance indicator is the model inference delay. The preset condition corresponding to the performance indicator is that the model inference delay is greater than a model inference delay threshold.

When the first AI model is a one-sided model, the first network element may monitor duration required when the model inference entity (for example, the terminal device or the DU) in which the first AI model is located performs model inference. For example, in the channel state information prediction scenario, the first network element may monitor duration required when the terminal device predicts channel state information, or duration required when the terminal device independently monitors the predicted channel state information of the terminal device, and then report the duration to the first network element.

When the first AI model is a two-sided model, the first network element may monitor duration required when a model inference entity (for example, the terminal device) in which the first AI submodel is located performs inference and monitor a sum of duration required when a model inference entity (for example, the DU) in which the second AI submodel is located performs inference. For example, in the channel state information compression scenario, the first network element may monitor compression duration required when the terminal device compresses the actual channel state information by using the first submodel, monitor decompression duration required when the DU obtains the inferred channel state information through decompression by using the second submodel, and use a sum of the compression duration and the decompression duration as model inference duration; or the terminal device independently monitors compression duration required when the terminal device compresses the actual channel state information by using the first submodel, and reports the compression duration to the first network element. The DU independently monitors decompression duration required when the DU obtains the inferred channel state information through decompression by using the second submodel, and reports the decompression duration to the first network element. The first network element uses a sum of the compression duration and the decompression duration as model inference duration. It should be noted that, when the first network element is a DU, the first network element may receive the compression duration from the terminal device, and then determine the model inference duration based on the decompression duration obtained through monitoring by the first network element.

For example, if the first network element determines that a value of the model inference duration is greater than the model inference delay threshold, the first network element changes the first AI model in the communication network; or if the first network element determines that a value of the model inference duration is less than or equal to the model inference delay threshold, the first network element determines that the first AI model in the communication network does not need to be changed, in other words, the first AI model continues to be used in the communication network. Optionally, for a specific implementation in which a preset condition corresponding to the model inference duration further includes the preset duration and/or the preset hysteresis condition, refer to the descriptions in the channel state information prediction scenario.

In addition, the preset condition corresponding to the performance indicator may alternatively be that the value of the performance indicator exceeds a value interval corresponding to the first AI model (or the model parameter and/or structure of the first AI model).

In a possible manner, the preset condition corresponding to the performance indicator is that the value of the performance indicator exceeds the value interval that is of the performance indicator and that corresponds to the first AI model. It may be understood that the configuration information further includes a correspondence between different AI models and the value interval of the performance indicator.

For example, the performance indicator is a ratio of air interface load/throughput, and the preset condition corresponding to the performance indicator is that the ratio of air interface load/throughput exceeds the value interval corresponding to the first AI model. The first network element may directly monitor the air interface load and the throughput of the terminal device, and then compute a ratio of the air interface load and the throughput of the terminal device. When determining that the ratio exceeds the value interval corresponding to the first AI model currently used in the communication network, the first network element may determine that the first AI model needs to be updated to the second AI model. The channel state information compression scenario is used as an example. The configuration information includes: the first AI model corresponds to a value interval 1, and the second AI model corresponds to a value interval 2. The first AI model uses a 120-bit compression manner, and the second AI model uses a 240-bit compression manner. Currently, both the terminal device and the DU are using the first AI model, that is, the terminal device compresses, in the 120-bit compression manner, the actual channel state information obtained by the terminal device through measurement, correspondingly, the DU obtains the inferred channel state information through decompression in the 120-bit decompression manner. Further, the first network element may monitor the air interface load and the throughput of the terminal device, to determine the ratio of air interface load/throughput. If the ratio falls within the value interval 1, the first network element may determine that the first AI model does not need to be updated; or if the ratio exceeds the value interval 1, for example, falls within the value interval 2, the first network element updates the first AI model to the second AI model.

In another possible manner, the preset condition corresponding to the performance indicator is that the value of the performance indicator exceeds the value interval that is of the performance indicator and that corresponds to the model parameter and/or structure of the first AI model. It may be understood that the configuration information further includes a correspondence between different model parameters and/or structures in a same AI model and a value interval of the performance indicator.

The channel state information compression scenario is used for another example. The preset condition includes: a model parameter 1 of the first AI model corresponds to the value interval 1, and a model parameter 2 corresponds to the value interval 2. The model parameter 1 indicates a 120-bit compression manner, and the model parameter 2 indicates a 240-bit compression manner. Currently, when both the terminal device and the DU are using the model parameter 1 of the first AI model, that is, the terminal device compresses, in the 120-bit compression manner, the actual channel state information obtained by the terminal device through measurement, correspondingly, the DU obtains the inferred channel state information through decompression in the 120-bit decompression manner. Further, the first network element may monitor the air interface load and the throughput of the terminal device, to determine the ratio of air interface load/throughput. If the first network element determines that the ratio falls within the value interval 1, the first network element may determine that the model parameter 1 in the first AI model does not need to be updated; or if the first network element determines that the ratio exceeds the value interval 1, for example, falls within the value interval 2, the first network element may update the model parameter 1 in the first AI model, to be specific, update the model parameter 1 in the first AI model to the model parameter 2.

It may be understood that, when the air interface load is large and the DU does not have a high recovery accuracy requirement for the channel state information, a high compression rate (for example, Float 32 bits to 120 bits, where SGCS=0.853) is considered, in other words, original channel state information (namely, the channel state information obtained by the terminal device through measurement) is compressed into less bits, thereby relieving air interface load pressure; or when the air interface load is small and the DU has a high recovery accuracy requirement for the channel state information, it is considered to compress the original channel state information in a manner with a low compression rate (for example, Float 32 bits to 240 bits, where SGCS=0.9144). In this application, 120 bits or 240 bits are a quantity of bits for transmitting or storing the compressed channel state information.

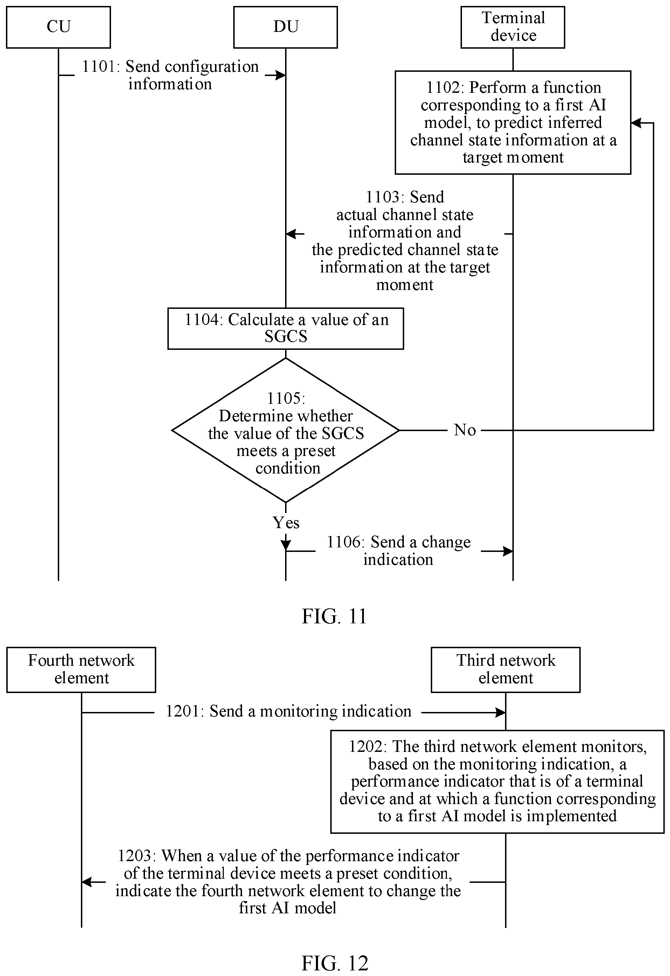

FIG. 11 is a schematic flowchart of a communication method in a channel state information prediction scenario. In the communication method, a first network element is specifically a DU, a second network element is specifically a CU, and a performance indicator in configuration information is specifically an SGCS.

Step 1101: The CU delivers the configuration information to the DU, where the configuration information includes the SGCS and a preset condition corresponding to the SGCS, the preset condition corresponding to the SGCS is that a value of the SGCS is less than 0.8, and preset duration is 1 ms.

Step 1102: A terminal device performs a function corresponding to a first AI model. In the channel state information prediction scenario, the terminal device predicts inferred channel state information (namely, an inference result) at a target moment based on channel state information at a plurality of historical moments and the first AI model.

Step 1103: The terminal device reports actual channel state information at the target moment and predicted channel state information at the target moment to the DU.

Step 1104: The DU computes the value of the SGCS based on the actual channel state information at the target moment and the predicted channel state information at the target moment that are reported by the terminal device. For a computing manner, refer to a relational expression 1.

Step 1105: The DU determines whether the value of the SGCS of the first AI model meets the preset condition.

Specifically, if the DU determines that the value of the SGCS of the first AI model meets the preset condition, step 1106 is performed; or if the DU determines that the value of the SGCS of the first AI model does not meet the preset condition, step 1102 to step 1105 continue to be performed, to be specific, the terminal device continues to perform a model inference step, and the DU continues to monitor a performance indicator of the first AI model. With reference to the foregoing example, if the DU determines that the computed value of the SGCS is less than 0.8 and duration is greater than preset duration 1 ms, the DU determines that the value of the SGCS meets the preset condition; or if the DU determines that the computed value of the SGCS is greater than or equal to 0.8, or duration less than 0.8 does not reach the preset duration 1 ms, the DU determines that the value of the SGCS does not meet the preset condition.

Step 1106: The DU sends a change indication to the terminal device, where the change indication may be used to switch the first AI model to a second AI model, or update a parameter and/or structure in the first AI model, or deactivate the first AI model, or make a communication network fall back from an AI mode to a non-AI mode.

It may be understood that the embodiment related to FIG. 11 is a specific implementation of the embodiment related to FIG. 9. For content that is not described in detail in step 1101, refer to the descriptions in step 901. For content that is not described in detail in step 1102 to step 1106, refer to the descriptions in step 902. For explanations of nouns/terms in embodiments of this application, refer to each other.

In the foregoing technical solution, the second network element determines the performance indicator used to measure the first AI model and the preset condition corresponding to the performance indicator, generates the configuration information based on the performance indicator of the first AI model and the preset condition corresponding to the performance indicator, and delivers the configuration information to the first network element. Correspondingly, the first network element monitors a value of a performance indicator of an AI model in a communication network based on the performance indicator in the configuration information; and when the value of the performance indicator of the AI model meets the preset condition corresponding to the performance indicator, determines that inference performance of the AI model deteriorates, and therefore, indicates to change the first AI model in the communication network. In this way, it can be quickly identified that the inference performance of the AI model deteriorates, and a corresponding measure is taken, to help improve communication quality. Further, when an access network device (for example, a base station) is of a CU-DU separation architecture, the CU delivers the configuration information to the DU, so that network side performance monitoring and network side decision-making can be implemented in a scenario such as a channel state information prediction scenario or a channel state information compression scenario. When performance of the first AI model deteriorates, a network side can find in a timely manner that the performance of the first AI model deteriorates, and perform an optimization action, to ensure overall network performance.

FIG. 12 shows still another communication method according to an example of this application. When a communication network is in an AI mode, inference performance of a first AI model associated with the AI mode is monitored, and the first AI model in the communication network is modified when it is identified that the inference performance of the AI model deteriorates.

For explanations of the first AI model, refer to descriptions in the related embodiment in FIG. 9.

Step 1201: A fourth network element sends a monitoring indication to a third network element. Correspondingly, the third network element receives the monitoring indication of the fourth network element.

The third network element is configured to monitor performance of the first AI model. The third network element is, for example, a CU, OAM, a core network device, or a trace collection entity (trace collection entity, TCE). The fourth network element is configured to determine a terminal device whose AI mode is enabled. The fourth network element is, for example, a DU, an RU, a near-real-time RIC, or a non-real-time RIC.

For example, when the third network element is a CU and the fourth network element is a DU, it may be considered that an architecture of an access network device is of a CU-DU separation architecture, and the CU and the DU communicates through an F1 interface. For example, the DU uses a DU configuration update (DU configuration update) message to carry the monitoring indication, and deliver the DU configuration update message to the CU.

The monitoring indication indicates, to the third network element, the terminal device whose AI mode is enabled. Optionally, the monitoring indication includes an identifier of the terminal device and/or an identifier of a reference signal corresponding to the terminal device. The reference signal may be specifically either an SSB or a CSI-RS.

Step 1202: The third network element monitors, based on the monitoring indication, a performance indicator that is of the terminal device and at which a function corresponding to the first AI model is implemented.

In a first example, the monitoring indication includes the identifier of the terminal device, and the third network element determines, based on the identifier of the terminal device, a terminal device that needs to be monitored, to monitor the performance indicator that is of the terminal device and at which the function corresponding to the first AI model is implemented.

In a second example, the monitoring indication includes the identifier of the reference signal corresponding to the terminal device, and the third network element determines, based on the identifier of the reference signal, a terminal device that needs to be monitored, to monitor the performance indicator that is of the terminal device and at which the function corresponding to the first AI model is implemented. It may be understood that the third network element allocates a reference signal to each terminal device. For example, a terminal device 1 corresponds to a reference signal 1, and a terminal device 2 corresponds to a reference signal 2. When determining that an AI mode of the terminal device 1 is enabled, the fourth network element sends an identifier of the reference signal 1 to the third network element. Correspondingly, the fourth network element determines, based on the identifier of the reference signal 1, that the terminal device 1 needs to be monitored, and monitors a performance indicator of the terminal device 1 when the terminal device 1 implements the function corresponding to the first AI model.

The performance indicator of the terminal device may include one or more of the following: a throughput (for example, an M5 event, scheduled IP throughput for UL/DL), a data volume (for example, an M4 event, UL/DL data volume), a delay (for example, an M6 event, UL/DL delay), a packet loss rate (M7, packet loss rate for DL/UL), and the like.

In a possible implementation, the performance indicator of the terminal device is the throughput of the terminal device, and the third network element monitors a throughput of the terminal device at a PDCP layer when the function corresponding to the first AI model is implemented. It is understood that the third network element can monitor "a protocol data unit (protocol data unit, PDU) data volume received by the PDCP layer of the terminal device from an RLC layer". When the inference performance of the AI model of the terminal device deteriorates, a system incorrectly predicts/estimates a current channel state, and consequently, a throughput of a MAC layer of the terminal device decreases, and further, the PDU data volume received by the PDCP layer of the terminal device from the RLC layer decreases. It is assumed that the throughput threshold is set in the third network element (for example, the CU), and when an AI model on a terminal device side is enabled, it is identified that statistics about the current throughput of the PDCP layer are collected based on the AI mode. Further, when the first network element determines that the PDU data volume received by the PDCP layer of the terminal device from the RLC layer is less than the throughput threshold and this lasts for preset duration, it is considered that the current first AI model needs to be optimized.

Step 1203: When a value of the performance indicator of the terminal device meets a preset condition, the third network element indicates the fourth network element to change the first AI model.

When the performance indicator of the terminal device is the throughput of the terminal device, the preset condition may be that the value of the performance indicator of the terminal device is less than the throughput threshold (or referred to as a preset throughput), or the preset condition may be that the value of the performance indicator of the terminal device is less than the throughput threshold and duration exceeds a throughput duration threshold. The throughput threshold is determined based on a channel state between the terminal device and the access network device. Certainly, the preset condition may further include a preset hysteresis condition. For use of the preset hysteresis condition, refer to descriptions in the channel state information prediction scenario.

In a possible manner, the terminal device measures a downlink reference signal, to obtain channel state information, and reports the channel state information to the third network element. Correspondingly, the third network element obtains the channel state information reported by the terminal device, and determines the throughput (namely, the throughput threshold) corresponding to the channel state information based on the channel state information. Better channel state information corresponds to a larger throughput threshold, and poorer channel state information corresponds to a smaller throughput threshold. Then, when determining that the monitored throughput of the terminal device is less than the throughput threshold, the third network element determines that performance of the first AI model deteriorates, and indicates the fourth network element to change the first AI model.

When the third network element determines the throughput threshold based on the channel state information, details may be as follows: The third network element determines, based on the channel state information, an MCS used for data transmission between the terminal device and the access network device. Further, the third network element determines the throughput threshold based on the MCS. For example, a corresponding throughput threshold when the MCS is 8QAM is less than a corresponding throughput threshold when the MCS is 16QAM. Channel state information prediction is used as an example. The DU learns, through inference based on the first model, that an amplitude of a channel is 0.6, and therefore allocates the MCS of 8QAM to the channel. However, because an actual channel amplitude of the channel is 1 (in other words, the inference performance deteriorates), the DU needs to allocate the MCS of 16QAM to the channel. Therefore, the third network element may determine that the throughput of the terminal device is less than the throughput threshold due to the first AI model, and indicate the fourth network element to change the first model.

Optionally, the third network element may send a performance abnormality indication to the fourth network element. The performance abnormality indication is used by the fourth network element to change the first AI model. Optionally, when the first AI model is a one-sided model, if the first AI model is deployed in the terminal device, the fourth network element may send a change indication to the terminal device, to indicate the terminal device to change the first AI model in the terminal device; or if the first AI model is deployed in the DU, the fourth network element may send a change indication to the DU, to indicate the DU to change the first AI model in the DU. In addition, when the fourth network element is a DU, the fourth network element directly changes the first AI model in the fourth network element. When the first AI model is a two-sided model, if the first AI submodel is deployed in the terminal device, and the second AI submodel is deployed in the DU, the fourth network element sends a first change indication to the terminal device, to indicate the terminal device to change the first AI submodel in the terminal device, and the fourth network element sends a second change indication to the DU, to indicate the DU to change the second AI submodel in the DU. In addition, when the fourth network element is a DU, the fourth network element directly changes the second AI submodel in the fourth network element, and sends the first change indication to the terminal device.

Further, when the third network element is a CU and the fourth network element is a DU, the CU delivers an error indication (error indication) message to the DU. The error indication message carries the performance abnormality indication. For example, the CU newly adds a cause option to a cause (cause) information element of the error indication message. The cause option may include a performance abnormality indication caused by enabling of the AI mode. Further, when the throughput of the terminal device decreases due to enabling of the AI mode, the performance abnormality indication in the cause option is a throughput cause (throughput cause); when a delay of the terminal device decreases due to enabling of the AI mode, the performance abnormality indication in the cause option is a delay cause (delay cause); when a packet loss rate of the terminal device decreases due to enabling of the AI mode, the performance abnormality indication in the cause option is a packet loss cause (packet loss rate cause); and when a data volume of the terminal device decreases due to enabling of the AI mode, the performance abnormality indication in the cause option is a data volume cause (data volume cause). In addition, the error indication message may further carry the identifier of the terminal device and/or the identifier of the reference signal corresponding to the terminal device.

In addition, the fourth network element may independently determine a manner of changing the first AI model. For example, after receiving the performance abnormality indication from the third network element, the fourth network element determines, based on the performance abnormality indication (for example, the throughput cause or the delay cause), a specific manner of changing the first AI model (for example, switching the first AI model to a second AI model, or updating a parameter and/or structure in the first AI model, or deactivating the first AI model, or making the communication network fall back from the AI mode to the non-AI mode). This helps ensure overall network performance.

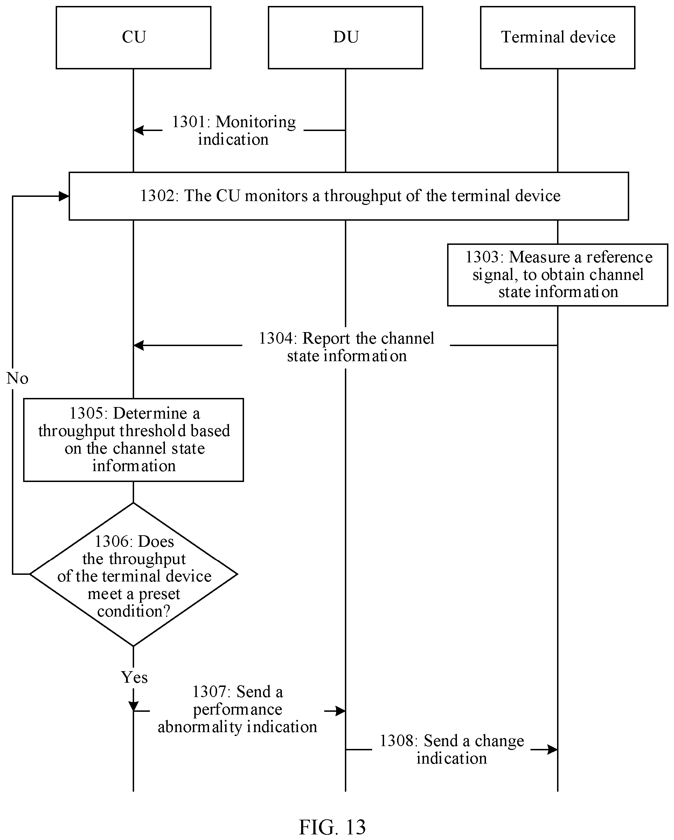

FIG. 13 shows a communication method in a channel state information prediction scenario. In the communication method, a third network element is a CU, and a fourth network element is a DU.

Step 1301: The DU sends a monitoring indication to the CU, where the monitoring indication includes an identifier of a terminal device.

Step 1302: The CU monitors a throughput of the terminal device.

Step 1303: The terminal device measures a reference signal, to obtain channel state information.

Step 1304: The terminal device reports the channel state information to the CU.

Step 1305: The CU determines, based on the channel state information reported by the terminal device, an MCS used for data transmission between the terminal device and an access network device, and determines a throughput threshold based on the MCS.

Step 1306: The CU determines whether the throughput of the terminal device meets a preset condition.

Specifically, if the CU determines that the throughput of the terminal device meets the preset condition, step 1307 and step 1308 are to be performed; or if the CU determines that the throughput of the terminal device does not meet the preset condition, step 1302 to step 1306 are to be performed, to be specific, the CU continues to monitor the throughput of the terminal device and determines whether the throughput meets the preset condition.

For example, when determining that the monitored throughput of the terminal device is less than the throughput threshold, or when determining that the monitored throughput of the terminal device is less than the throughput threshold and duration reaches a throughput duration threshold, the CU determines that the throughput of the terminal device meets the preset condition.

Step 1307: The CU sends a performance abnormality indication to the DU. Correspondingly, the DU receives the performance abnormality indication from the CU.

Step 1308: The DU sends a change indication to the terminal device, where the change indication may indicate the terminal device to switch a first AI model to a second AI model, or update a parameter and/or structure in a first AI model, or deactivate a first AI model, or make a communication network fall back from an AI mode to a non-AI mode.

It may be understood that the embodiment related to FIG. 13 is a specific implementation of the embodiment related to FIG. 12. For content that is not described in detail in step 1301, refer to the descriptions in step 1201. For content that is not described in detail in step 1302 to step 1308, refer to the descriptions in step 1202. For explanations of nouns/terms in embodiments of this application, refer to each other.

In this application, the CU may periodically monitor the throughput of the terminal device. The terminal device may also periodically report the channel state information. In other words, the CU may periodically determine the throughput threshold. It may be understood that a periodicity in which the CU monitors the throughput is the same as or different from a periodicity in which the terminal device reports the channel state information. In a possible manner, after obtaining the throughput of the terminal device through monitoring, the CU may obtain a throughput threshold determined by the CU at a moment closest to a current moment, and then determine, based on the monitored throughput of the terminal device and the throughput threshold at the closest moment, whether the throughput meets the preset condition.

In the foregoing technical solution, the fourth network element determines a terminal device whose AI mode is enabled, indicates, based on the monitoring indication, the third network element to monitor a performance indicator that is of the terminal device and at which a function corresponding to the first AI model is implemented, and when determining that a value of the performance indicator meets a preset condition, determine that inference performance of the AI model deteriorates, and therefore, indicate the fourth network element to change the first AI model in the communication network. In this way, it can be quickly identified that the inference performance of the AI model deteriorates and a corresponding measure is taken, to help improve communication quality. Further, when the access network device (for example, a base station) is of a CU-DU separation architecture, the DU sends the monitoring indication to the CU when the AI mode is enabled, to indicate the CU to monitor performance of the terminal device whose AI mode is also enabled, and notify the DU when determining that the performance of the terminal device is abnormal. The DU further identifies a problem and optimizes a first AI model corresponding to the AI mode, so that network side performance monitoring and network side decision-making can be implemented in a scenario such as a channel state information prediction scenario or a channel state information compression scenario, to ensure overall network performance.

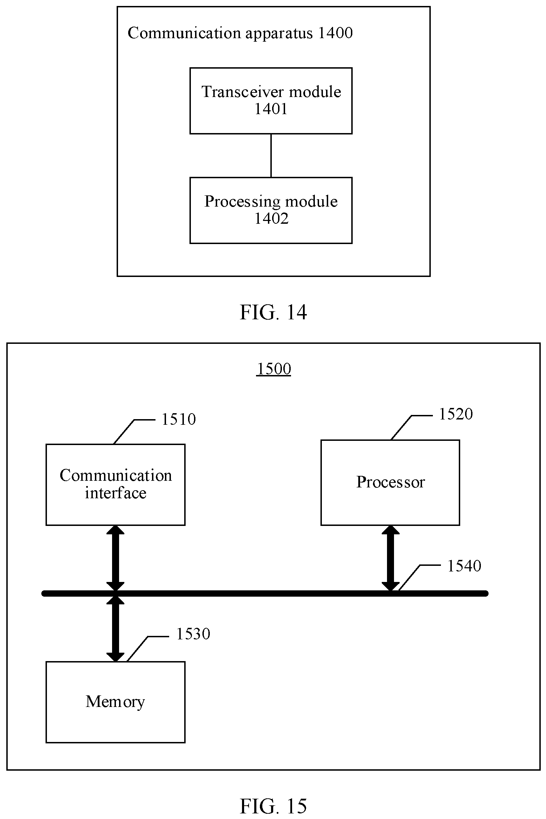

Based on the foregoing content and a same concept, FIG. 14 and FIG. 15 are diagrams of possible structures of communication apparatuses according to this application. The communication apparatuses may be configured to implement the function of the first network element, the second network element, the third network element, or the fourth network element in the method embodiments, and therefore can also implement beneficial effects of the method embodiments. The following describes only main steps of implementing the communication apparatus. For other implementation details, refer to the foregoing embodiments. Details are not described herein again.

For example, with reference to FIG. 3 to FIG. 4b, when the communication apparatus is a first network element, the communication apparatus may be specifically a DU; when the communication apparatus is a second network element, the communication apparatus may be specifically a CU; when the communication apparatus is a third network element, the communication apparatus may be specifically a CU; or when the communication apparatus is a fourth network element, the communication apparatus may be specifically a DU.

As shown in FIG. 14, the communication apparatus 1400 includes a transceiver module 1401 and a processing module 1402.

When the communication apparatus 1400 is a first network element:

The transceiver module 1401 is configured to receive configuration information from a second network element. The configuration information includes a performance indicator of a first AI model and a preset condition corresponding to the performance indicator. The processing module 1402 is configured to change the first AI model when a value of the performance indicator of the first AI model meets the preset condition.

In a possible implementation, the processing module 1402 is further configured to: obtain an actual result and an inference result, where the inference result is obtained through inference based on the first AI model, and the actual result is obtained based on actual measurement; determine the value of the performance indicator of the first AI model based on the actual result and the inference result; and determine that the value of the performance indicator of the first AI model meets the preset condition.

In a possible implementation, when the first AI model is a one-sided model, the first AI model is deployed in a terminal device. When obtaining the actual result and the inference result, the processing module 1402 is specifically configured to control the transceiver module 1401 to receive the actual result and the inference result from the terminal device. The actual result is channel state information obtained by the terminal device by actually measuring a reference signal at a target moment, the inference result is channel state information that is at the target moment and that is predicted by the terminal device based on the first AI model and channel state information obtained by measuring the reference signal at a historical moment, and the historical moment is before the target moment.

In a possible implementation, when the first AI model is a two-sided model, the first AI model includes a first AI submodel and a second AI submodel, the first AI submodel is deployed in a terminal device, and the second AI submodel is deployed in the first network element. When obtaining the actual result and the inference result, the processing module 1402 is specifically configured to: control the transceiver module 1401 to receive the actual result from the terminal device, where the actual result is channel state information obtained by the terminal device by actually measuring a reference signal; and control the transceiver module 1401 to receive a compression result from the terminal device, and decompress the compression result based on the second AI submodel to obtain the inference result, where the compression result is obtained by the terminal device by compressing the channel state information based on the first AI submodel.

In a possible implementation, when changing the first AI model, the processing module 1402 is specifically configured to: switch the first AI model to a second AI model; update a parameter and/or structure in the first AI model; deactivate the first AI model; and make a communication network fall back from an AI mode to a non-AI mode.

In a possible implementation, the communication apparatus 1400 is a distributed unit DU, the second network element is a central unit CU, and the DU and the CU are connected through an F 1 interface.

When the communication apparatus 1400 is a third network element:

The transceiver module 1401 is configured to receive a monitoring indication of a fourth network element. The processing module 1402 is configured to: monitor, based on the monitoring indication, a performance indicator that is of a terminal device and at which a function corresponding to a first artificial intelligence AI model is implemented; and when a value of a performance indicator of the first AI model meets a preset condition, indicate the fourth network element to change the first AI model.

In a possible implementation, the monitoring indication includes an identifier of the terminal device and/or an identifier of a reference signal corresponding to the terminal device; and when monitoring, based on the monitoring indication, the performance indicator that is of the terminal device and at which the function corresponding to the first AI model is implemented, the processing module 1402 is specifically configured to: determine the terminal device based on the identifier of the terminal device and/or the identifier of the reference signal corresponding to the terminal device; and monitor the performance indicator that is of the terminal device and at which the function corresponding to the first AI model is implemented.

In a possible implementation, the performance indicator is a throughput. When the value of the performance indicator of the first AI model meets the preset condition, when indicating the fourth network element to change the first AI model, the processing module 1402 is specifically configured to: obtain channel state information reported by the terminal device; determine a throughput corresponding to the channel state information based on the channel state information; and when determining that a monitored throughput of the terminal device is less than the throughput corresponding to the channel state information, indicate the fourth network element to change the first AI model.

In a possible implementation, when indicating the fourth network element to change the first AI model, the processing module 1402 is specifically configured to: indicate the fourth network element to perform one or more of the following: switching the first AI model to a second AI model; updating a parameter and/or structure in the first AI model; deactivating the first AI model; and making a communication network fall back from an AI mode to a non-AI mode.

In a possible implementation, the third network element is a central unit CU, the fourth network element is a distributed unit DU, and the CU and the DU are connected through an F1 interface.

Division into the modules in embodiments of this application is an example, is merely division into logical functions, and may be other division in an actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 15 shows an apparatus 1500 according to an embodiment of this application. The apparatus shown in FIG. 15 may be an implementation of a hardware circuit of the apparatus shown in FIG. 14. The apparatus is applicable to the foregoing flowcharts, and performs the function of the first network element, the second network element, the third network element, or the fourth network element in the method embodiments.

For ease of description, FIG. 15 shows only main components of the apparatus.

The apparatus 1500 shown in FIG. 15 includes a communication interface 1510, a processor 1520, and a memory 1530. The memory 1530 is configured to store program instructions and/or data. The processor 1520 may cooperate with the memory 1530. The processor 1520 may execute the program instructions stored in the memory 1530. When the instructions or the program stored in the memory 1530 is executed, the processor 1520 is configured to perform an operation performed by the processing module 1402 in the foregoing embodiment, and the communication interface 1510 is configured to perform an operation performed by the transceiver module 1401 in the foregoing embodiment.

The memory 1530 is coupled to the processor 1520. The coupling in this embodiment of this application may be an indirect coupling or a communication connection between apparatuses, units, or modules in an electrical form, a mechanical form, or another form, and is used for information exchange between the apparatuses, the units, or the modules. At least one of the memories 1530 may be included in the processor 1520.

In this embodiment of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver or a communication interface integrated with sending and receiving functions.

The apparatus 1500 may further include a communication line 1540. The communication interface 1510, the processor 1520, and the memory 1530 may be interconnected through a communication line 1540. The communication line 1540 may be a peripheral component interconnect (peripheral component interconnect, PCI for short) bus, an extended industry standard architecture (extended industry standard architecture, EISA for short) bus, or the like. The communication line 1540 may be classified into an address bus, a data bus, a control bus, and the like. For ease of representation, only one bold line is used for indication in FIG. 15, but it does not indicate that there is only one bus or only one type of bus.

Based on the foregoing content and a same concept, an embodiment of this application provides a computer-readable storage medium. The computer-readable storage medium stores a computer program or instructions. When the computer program or the instructions are executed, a computer is enabled to perform the method in any possible implementation of the method embodiments.

Based on the foregoing content and a same concept, an embodiment of this application provides a computer program product. When a computer reads and executes the computer program product, the computer is enabled to perform the method in any possible implementation of the method embodiments.

Based on the foregoing content and a same concept, an embodiment of this application provides a chip system, including a processor. The processor is coupled to a memory, the memory is configured to store a program or instructions, and when the program or the instructions are executed by the processor, the chip system is enabled to implement the method in the method embodiments.

Optionally, the chip system further includes an interface circuit, and the interface circuit is configured to exchange code instructions with the processor.

Optionally, there may be one or more processors in the chip system, and the processor may be implemented by hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

It may be understood that "greater than" in this application may be "greater than or equal to" in some cases, and "less than" may be "less than or equal to" in some cases. For ease of description, "greater than" and "less than" are used as examples for description in this application. In this application, "greater than" may also be referred to as "higher than" or "higher than or equal to" in some cases, and "less than" in this application may also be referred to as "lower than" or "lower than or equal to" in some cases.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the protection scope of this application. Therefore, this application is intended to cover these modifications and variations of this application provided that they fall within the scope defined by the following claims and their equivalent technologies.

**Claims**

1. A communication method, comprising:

   receiving, by a first network element, configuration information from a second network element, wherein the configuration information comprises a performance indicator of a first artificial intelligence AI model and a preset condition corresponding to the performance indicator; and
   changing, by the first network element, the first AI model when a value of the performance indicator of the first AI model meets the preset condition.

2. The method according to claim 1, further comprising:

   obtaining, by the first network element, an actual result and an inference result, wherein the inference result is obtained through inference based on the first AI model, and the actual result is obtained based on actual measurement;
   determining, by the first network element, the value of the performance indicator of the first AI model based on the actual result and the inference result; and

determining, by the first network element, that the value of the performance indicator of the first AI model meets the preset condition.

3. The method according to claim 1 or 2, wherein the first AI model is deployed in a terminal device; and

obtaining, by the first network element, the actual result and the inference result comprises:

receiving, by the first network element, the actual result and the inference result from the terminal device, wherein the actual result is channel state information obtained by the terminal device by actually measuring a reference signal at a target moment, the inference result is channel state information that is at the target moment and that is predicted by the terminal device based on the first AI model and channel state information obtained by measuring the reference signal at a historical moment, and the historical moment is before the target moment.

4. The method according to claim 1 or 2, wherein the first AI model comprises a first AI submodel and a second AI submodel, the first AI submodel is deployed in a terminal device, and the second AI submodel is deployed in the first network element; and

obtaining, by the first network element, the actual result and the inference result comprises:

receiving, by the first network element, the actual result from the terminal device, wherein the actual result is channel state information obtained by the terminal device by actually measuring a reference signal; and

receiving, by the first network element, a compression result from the terminal device, and decompressing the compression result based on the second AI submodel to obtain the inference result, wherein the compression result is obtained by the terminal device by compressing the channel state information based on the first AI submodel.

5. The method according to any one of claims 1 to 4, wherein changing, by the first network element, the first AI model comprises:

switching, by the first network element, the first AI model to a second AI model;

updating, by the first network element, a parameter and/or structure in the first AI model;

deactivating, by the first network element, the first AI model; and

making, by the first network element, a communication network fall back from an AI mode to a non-AI mode.

6. The method according to any one of claims 1 to 5, wherein the first network element is a distributed unit DU, the second network element is a central unit CU, and the DU and the CU are connected through an F1 interface.

7. A communication method, comprising:

receiving, by a third network element, a monitoring indication of a fourth network element;

monitoring, by the third network element based on the monitoring indication, a performance indicator that is of a terminal device and at which a function corresponding to a first artificial intelligence AI model is implemented; and

when a value of the performance indicator of the terminal device meets the preset condition, indicating, by the third network element, the fourth network element to change the first AI model.

8. The method according to claim 7, wherein the monitoring indication comprises an identifier of the terminal device and/or an identifier of a reference signal corresponding to the terminal device; and

monitoring, by the third network element based on the monitoring indication, the performance indicator that is of the terminal device and at which the function corresponding to the first AI model is implemented comprises:

determining, by the third network element, the terminal device based on the identifier of the terminal device and/or the identifier of the reference signal corresponding to the terminal device; and

monitoring, by the third network element, the performance indicator that is of the terminal device and at which the function corresponding to the first AI model is implemented.

9. The method according to claim 7 or 8, wherein the performance indicator is a throughput; and

when a value of a performance indicator of the first AI model meets the preset condition, indicating, by the third network element, the fourth network element to change the first AI model comprises:

obtaining, by the third network element, channel state information reported by the terminal device;

determining, by the third network element, a throughput corresponding to the channel state information based on the channel state information; and

when determining that a monitored throughput of the terminal device is less than the throughput corresponding to the channel state information, indicating, by the third network element, the fourth network element to change the first AI model.

10. The method according to any one of claims 7 to 9, wherein indicating, by the third network element, the fourth network element to change the first AI model comprises:

indicating, by the third network element, the fourth network element to perform one or more of the following:

switching the first AI model to a second AI model;

updating a parameter and/or structure in the first AI model;

deactivating the first AI model; and

making a communication network fall back from an AI mode to a non-AI mode.

11. The method according to any one of claims 7 to 10, wherein the third network element is a central unit CU, the fourth network element is a distributed unit DU, and the CU and the DU are connected through an F1 interface.

12. A communication apparatus, comprising:

a transceiver module, configured to receive configuration information from a second network element, wherein the configuration information comprises a performance indicator of a first artificial intelligence AI model and a preset condition corresponding to the performance indicator; and

a processing module, configured to change the first AI model when a value of the performance indicator of the first AI model meets the preset condition.

13. The apparatus according to claim 12, wherein the processing module is further configured to:

obtain an actual result and an inference result, wherein the inference result is obtained through inference based on the first AI model, and the actual result is obtained based on actual measurement;

determine the value of the performance indicator of the first AI model based on the actual result and the inference result; and

determine that the value of the performance indicator of the first AI model meets the preset condition.

14. The apparatus according to claim 12 or 13, wherein the first AI model is deployed in a terminal device, and when obtaining the actual result and the inference result, the processing module is specifically configured to:

control the transceiver module to receive the actual result and the inference result from the terminal device, wherein the actual result is channel state information obtained by the terminal device by actually measuring a reference signal at a target moment, the inference result is channel state information that is at the target moment and that is predicted by the terminal device based on the first AI model and channel state information obtained by measuring the reference signal at a historical moment, and the historical moment is before the target moment.

15. The apparatus according to claim 12 or 13, wherein the first AI model comprises a first AI submodel and a second AI submodel, the first AI submodel is deployed in a terminal device, the second AI submodel is deployed in the first network element, and when obtaining the actual result and the inference result, the processing module is specifically configured to:

control the transceiver module to receive the actual result from the terminal device, wherein the actual result is channel state information obtained by the terminal device by actually measuring a reference signal; and

control the transceiver module to receive a compression result from the terminal device, and decompress the compression result based on the second AI submodel to obtain the inference result, wherein the compression result is obtained by the terminal device by compressing the channel state information based on the first AI submodel.

16. The apparatus according to any one of claims 12 to 15, wherein when changing the first AI model, the processing module is specifically configured to:

switch the first AI model to a second AI model;
update a parameter and/or structure in the first AI model;
deactivate the first AI model; and
make a communication network fall back from an AI mode to a non-AI mode.

17. The apparatus according to any one of claims 12 to 16, wherein the communication apparatus is a distributed unit DU, the second network element is a central unit CU, and the DU and the CU are connected through an F1 interface.

18. A communication apparatus, comprising:

a transceiver module, configured to receive a monitoring indication of a fourth network element; and
a processing module, configured to: monitor, based on the monitoring indication, a performance indicator that is of a terminal device and at which a function corresponding to a first artificial intelligence AI model is implemented; and when a value of a performance indicator of the first AI model meets the preset condition, indicate the fourth network element to change the first AI model.

19. The apparatus according to claim 18, wherein the monitoring indication comprises an identifier of the terminal device and/or an identifier of a reference signal corresponding to the terminal device; and
when monitoring, based on the monitoring indication, the performance indicator that is of the terminal device and at which the function corresponding to the first AI model is implemented, the processing module is specifically configured to:
determine the terminal device based on the identifier of the terminal device and/or the identifier of the reference signal corresponding to the terminal device; and monitor the performance indicator that is of the terminal device and at which the function corresponding to the first AI model is implemented.

20. The apparatus according to claim 18 or 19, wherein the performance indicator is a throughput; and
when the value of the performance indicator of the first AI model meets the preset condition, when indicating the fourth network element to change the first AI model, the processing module is specifically configured to:

obtain channel state information reported by the terminal device;
determine a throughput corresponding to the channel state information based on the channel state information; and
when determining that a monitored throughput of the terminal device is less than the throughput corresponding to the channel state information, indicate the fourth network element to change the first AI model.

21. The apparatus according to any one of claims 18 to 20, wherein when indicating the fourth network element to change the first AI model, the processing module is specifically configured to:
indicate the fourth network element to perform one or more of the following:

switching the first AI model to a second AI model;
updating a parameter and/or structure in the first AI model;
deactivating the first AI model; and
making a communication network fall back from an AI mode to a non-AI mode.

22. The apparatus according to any one of claims 18 to 21, wherein the third network element is a central unit CU, the fourth network element is a distributed unit DU, and the CU and the DU are connected through an F1 interface.

23. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 6 by using a logic circuit or executing code instructions, or the processor is configured to implement the method according to any one of claims 7 to 11 by using a logic circuit or executing code instructions.

24. A computer-readable storage medium, wherein the computer-readable storage medium stores a computer program or instructions, and when the computer program or the instructions are executed by a communication apparatus, the method according to any one of claims 1 to 6 is implemented, or the method according to any one of claims 7 to 11 is implemented.

25. A computer program product, wherein the computer program product comprises a computer program or instructions, and when the computer program or the instructions are executed by a communication apparatus, the method according to any one of claims 1 to 6 is implemented, or the method according to any one of claims 7 to 11 is implemented.

FIG. 1

FIG. 2

FIG. 3

FIG. 4a

FIG. 4b

Performance feedback

Model training node

Training data

Model deployment/
updating

Model
feedback

Data source

Inference data

Model inference
node

Output

Actor

FIG. 5

**Terminal
device**

**Access
network device**

Actual
channel
state
information

Encoder → Quantizer

Dequantizer → Decoder

Inferred
channel
state
information

**Channel state information
compression model**

FIG. 6

Channel state
information from a
t–k moment to a t
moment

**Channel state
information prediction
model**

(Inferred) channel
state information at
a t+1 moment

FIG. 7

| Terminal device | Access network device | Core network device/ OAM |
|---|---|---|

| AI-related capability interaction |
|---|

| Data collection for AI model training |
|---|

| AI model training |
|---|

| AI model operation (including model registration, model configuration, and the like) |
|---|

| Data collection for AI model inference |
|---|

| AI model inference |
|---|

| AI model performance feedback and/or monitoring |
|---|

| AI model switching/updating/deactivation/fallback to a conventional manner |
|---|

FIG. 8

Second network
element

First network element

901: Send configuration information

902: Change a first AI model in a
communication network when a
value of a performance indicator of
a first AI model meets a preset
condition

FIG. 9

Intermediate KPI threshold (choice
intermediate KPI threshold)

Intermediate KPI
(intermediate
KPI)

Preset hysteresis
(hysteresis) condition

KPI type option
for event trigger
(choice KPI type
for event trigger)

Eventual KPI
(eventual KPI)

Trigger duration for optimizing an AI
model (time to trigger for optimizing
AI model)

Another KPI
(other KPI)

FIG. 10

```
   CU                    DU                              Terminal
                                                          device

    ├── 1101: Send configuration ──►│
    │         information            │         ┌──────────────────────────────┐
    │                                │         │ 1102: Perform a function      │
    │                                │         │ corresponding to a first AI   │◄──┐
    │                                │         │ model, to predict inferred    │   │
    │                                │         │ channel state information at a │   │
    │                                │         │ target moment                 │   │
    │                                │         └──────────────────────────────┘   │
    │                                │                      1103: Send             │
    │                                │                 actual channel state        │
    │                                │◄──              information and             │
    │                                │               the predicted channel state   │
    │                                │                information at the target     │
    │                                │                        moment                │
    │              ┌─────────────────────────────────┐                             │
    │              │ 1104: Calculate a value of an    │                             │
    │              │          SGCS                    │                             │
    │              └─────────────────────────────────┘                             │
    │                                                                              │
    │                      ◇ 1105:                                                 │
    │                   Determine whether                                          │
    │                 the value of the SGCS ───── No ────────────────────────────►─┘
    │                   meets a preset
    │                     condition ◇
    │
    │                        Yes
    │                         │        1106: Send a change
    │                         ▼────────   indication    ──────►│
```

FIG. 11

```
  Fourth network                              Third network
     element                                     element

    ├────────── 1201: Send a monitoring indication ──────────►│
    │                                    ┌──────────────────────────────────────┐
    │                                    │ 1202: The third network element       │
    │                                    │ monitors, based on the monitoring      │
    │                                    │ indication, a performance indicator    │
    │                                    │ that is of a terminal device and at    │
    │                                    │ which a function corresponding to a    │
    │                                    │ first AI model is implemented          │
    │                                    └──────────────────────────────────────┘
    │ 1203: When a value of the performance indicator
    │◄── of the terminal device meets a preset condition,
    │   indicate the fourth network element to change the
    │               first AI model
```

FIG. 12

| CU | DU | Terminal device |
|---|---|---|

1301: Monitoring indication

1302: The CU monitors a throughput of the terminal device

1303: Measure a reference signal, to obtain channel state information

1304: Report the channel state information

No

1305: Determine a throughput threshold based on the channel state information

1306: Does the throughput of the terminal device meet a preset condition?

Yes

1307: Send a performance abnormality indication

1308: Send a change indication

FIG. 13

FIG. 14

FIG. 15

37

## INTERNATIONAL SEARCH REPORT

| International application No. |
| --- |
| **PCT/CN2024/073082** |

| A. | CLASSIFICATION OF SUBJECT MATTER |
| --- | --- |

H04W24/10(2009.01)i

According to International Patent Classification (IPC) or to both national classification and IPC

| B. | FIELDS SEARCHED |
| --- | --- |

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, DWPI, ENTXTC, CNKI: 更改, 更换, 更新, 理论, 模型, 配置, 切换, 去激活, 实际, 条件, 推理, 网络, 网元, 性能, 性能指标, 预测, ai, kpi, model, modle, updat+, ai/ml, predict+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110417565 A (HUAWEI TECHNOLOGIES CO., LTD.) 05 November 2019 (2019-11-05) description, paragraphs 148-252 | 1-3, 5-14, 16-25 |
| X | WO 2022062362 A1 (HUAWEI TECHNOLOGIES CO., LTD.) 31 March 2022 (2022-03-31) description, paragraphs 284-302 | 1, 5, 12, 16, 23-25 |
| A | CN 111428882 A (LENOVO (BEIJING) CO., LTD.) 17 July 2020 (2020-07-17) entire document | 1-25 |
| A | US 2022377844 A1 (QUALCOMM INC.) 24 November 2022 (2022-11-24) entire document | 1-25 |
| A | WO 2021142609 A1 (GUANGDONG OPPO MOBILE TELECOMMUNICATIONS CORP., LTD.) 22 July 2021 (2021-07-22) entire document | 1-25 |
| A | CN 114727313 A (CHINA MOBILE COMMUNICATIONS CO., LTD. RESEARCH INSTITUTE et al.) 08 July 2022 (2022-07-08) entire document | 1-25 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 February 2024** | **04 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/073082**

| Patent document cited in search report | | | Publication date (day/month/year) | Patent family member(s) | | | Publication date (day/month/year) |
|---|---|---|---|---|---|---|---|
| CN | 110417565 | A | 05 November 2019 | JP | 2021520748 | A | 19 August 2021 |
| | | | | JP | 7159347 | B2 | 24 October 2022 |
| | | | | US | 2021044488 | A1 | 11 February 2021 |
| | | | | US | 11451452 | B2 | 20 September 2022 |
| | | | | EP | 3780495 | A1 | 17 February 2021 |
| | | | | EP | 3780495 | A4 | 01 September 2021 |
| | | | | WO | 2019206196 | A1 | 31 October 2019 |
| WO | 2022062362 | A1 | 31 March 2022 | US | 2023224752 | A1 | 13 July 2023 |
| | | | | CA | 3193840 | A1 | 31 March 2022 |
| | | | | WO | 2022061784 | A1 | 31 March 2022 |
| | | | | EP | 4207860 | A1 | 05 July 2023 |
| | | | | AU | 2021347699 | A1 | 18 May 2023 |
| CN | 111428882 | A | 17 July 2020 | | None | | |
| US | 2022377844 | A1 | 24 November 2022 | US | 11818806 | B2 | 14 November 2023 |
| | | | | WO | 2022245459 | A1 | 24 November 2022 |
| WO | 2021142609 | A1 | 22 July 2021 | EP | 4087343 | A1 | 09 November 2022 |
| | | | | EP | 4087343 | A4 | 11 January 2023 |
| | | | | US | 2022342713 | A1 | 27 October 2022 |
| CN | 114727313 | A | 08 July 2022 | | None | | |

Form PCT/ISA/210 (patent family annex) (July 2022)

**EP 4 637 205 A1**